# EUROPEAN PATENT APPLICATION

(11) **EP 4 266 223 A1**
(43) Date of publication of application: **25.10.2023**
(21) Application number: 21920986.3
(22) Date of filing: 21.01.2021
(51) Int. Cl.: G06Q 10/06

(54) **INFORMATION PROCESSING APPARATUS, INFORMATION PROCESSING METHOD, AND INFORMATION PROCESSING PROGRAM**

(71) Applicant: Mitsubishi Electric Corporation, Tokyo 100-8310 (JP)
(72) Inventor: ITAGAKI, Genya, Tokyo 100-8310 (JP); MORI, Ikumi, Tokyo 100-8310 (JP)
(74) Representative: Pfenning, Meinig & Partner mbB
(86) International application number: PCT/JP2021/001949
(87) International publication number: WO 2022/157873

(57) **Abstract**

In platform knowledge (110), a plurality of devices, a plurality of solutions by the plurality of devices, and a plurality of abstract concepts that associates the plurality of devices with the plurality of solutions, are indicated, and each device is correlated to one or more abstract concepts and each solution is correlated to one or more abstract concepts. In user knowledge (120), a user device which is used by a user, a user device solution by the user device, and a user device abstract concept which associates the user device with the user device solution, are indicated. A search unit (10) searches for at least one of: a device other than the user device, which is correlated to the user device abstract concept in the platform knowledge (110); and a solution other than the user device solution, which is correlated to the user device abstract concept in the platform knowledge (110).

## Description

### Technical Field

The present disclosure relates to a technique to manage a device and a solution provided by the device.

### Background Art

Devices such as home appliances are usually dedicated devices that provide a specific solution. Many of these devices are equipped with a sensor or/and an actuator. Then, such a device uses the sensor to measure a stare of a real environment and also uses the actuator to interact with the real environment. The sensor recognizes the real environment and the actuator controls the real environment. Therefore, roles of the sensor and the actuator are not limited to the specific solution.

For example, an infrared sensor mounted on an air conditioner is used to measure a temperature. On the other hand, the infrared sensor also functions as a human sensor, so that the infrared sensor can be used for a solution such as intrusion detection or watching. In Internet of Things (loT), devices are connected to each other and share a value of the sensor. Therefore, it is desirable that a device provides a solution for multi-purpose.

On the other hand, it is required to change a business model in order to respond to needs focusing on a personal lifestyle. The conventional business model in which a device manufacture sells a device directed to an individual solution is inefficient since the device manufacturer is required to change a sales strategy for each user. Accordingly, the business model is required to turn to a user-led type business model in which a user selects a necessary solution and purchases a necessary device from the manufacturer. In order to realize the user-led type business model, it is desirable to recommend to the user, a device and/or a solution that relates to a device currently used by the user and a solution provided by the currently used device.

Patent Literature 1 discloses a method of describing a solution by defining a data structure regarding a value (a purpose, a pleasant thing, or an unpleasant thing) and a requirement (a perspective of a manufacturer, a perspective of a user, or the like) of the user, with using ontology in order to recommend the solution, and by recommending the solution through the data structure based on attribute information or the like of the user.

### Citation List

### Patent Literature

Patent Literature 1: JP 2006-268405 A

### Summary of Invention

### Technical Problem

The technique described in Patent Literature 1 recommends the solution by semantically tying the value of the user to the solution. However, the technique described in Patent Literature 1 does not consider a device used by the user and a solution provided by the used device when making a recommendation. Therefore, in the technique of Patent Literature 1, there is a problem in that it is not possible to recommend a device and/or a solution relating to the device used by the user and also it is not possible to recommend a device and/or a solution relating to the solution provided by the device used by the user.

The present disclosure mainly aims to solve such a problem. Specifically, a main purpose of the present disclosure is to search for at least one of a device and a solution relating to at least one of a device used by a user and a solution provided by the device used by the user.

### Solution to Problem

An information processing apparatus according to the present disclosure includes:
a definition information management unit to manage definition information indicating a plurality of devices, a plurality of solutions provided by the plurality of devices, and a plurality of association concepts which is a plurality of concepts that associates the plurality of devices with the plurality of solutions, and correlating each device to one or more association concepts and correlating each solution to one or more association concepts;
a user information management unit to manage user information indicating as a user device, a device which is one of devices indicated in the definition information and which is used by a user, indicating as a user device solution, a solution which is one of solutions indicated in the definition information and which is provided by the user device, and indicating as a user device association concept, an association concept which is one of association concepts indicated in the definition information and which associates the user device with the user device solution; and
a search unit to search for at least one of: a device other than the user device, which is correlated to the user device association concept in the definition information; and a solution other than the user device solution, which is correlated to the user device association concept in the definition information.

### Advantageous Effects of Invention

According to the present disclosure, it is possible to search for at least one of a device and a solution relating to at least one of a device used by a user and a solution provided by the device used by the user. As a result, according to the present disclosure, it is possible to recommend to the user, at least one of the device and the solution relating to at least one of the device used by the user and the solution provided by the device used by the user.

### Brief Description of Drawings

Fig. 1 is a diagram illustrating a functional configuration example of a recommendation apparatus according to Embodiment 1.
Fig. 2 is a diagram illustrating a hardware configuration example of the recommendation apparatus according to Embodiment 1.
Fig. 3 is a diagram illustrating an example of a conceptual hierarchy according to Embodiment 1.
Fig. 4 is a diagram illustrating an example of generating a domain name list according to Embodiment 1.
Fig. 5 is a diagram illustrating an example of a filtering process according to Embodiment 1.
Fig. 6 is a diagram illustrating an example of a pruning process according to Embodiment 1.
Fig. 7 is a diagram illustrating an example of a connecting process according to Embodiment 1.
Fig. 8 is a flowchart illustrating an operation example of the recommendation apparatus according to Embodiment 1.
Fig. 9 is a flowchart illustrating details of a recommendation process according to Embodiment 1.
Fig. 10 is a diagram illustrating an example of the recommendation process according to Embodiment 1.
Fig. 11 is a diagram describing Modification 1.
Fig. 12 is a diagram describing Modification 2.
Fig. 13 is a diagram describing Modification 3.
Fig. 14 is a diagram illustrating a functional configuration example of the recommendation apparatus according to Embodiment 2.
Fig. 15 is a diagram illustrating the conceptual hierarchy and a purchase history according to Embodiment 2.
Fig. 16 is a diagram illustrating a functional configuration example of the recommendation apparatus according to Embodiment 3.
Fig. 17 is a diagram illustrating an example of a generality score according to Embodiment 3.
Fig. 18 is a diagram illustrating an example of a usefulness score according to Embodiment 3.
Fig. 19 is a diagram illustrating an example of updating the generality score according to Embodiment 3.
Fig. 20 is a diagram illustrating a functional configuration example of the recommendation apparatus according to Embodiment 4.
Fig. 21 is a diagram illustrating an example of a notation inconsistency candidate according to Embodiment 4.

### Description of Embodiments

Embodiments will be described hereinafter with reference to the drawings. In the following description of the embodiments and the drawings, portions denoted by the same reference signs indicate the same or corresponding portions.

### Embodiment 1.

### *** Overview ***

In the present embodiment, an abstract concept is used for a correlation between a device and a solution provided by the device. The device is a machine, an instrument, or the like that is used by a user and produces a useful effect. The device includes a home appliance, an information device, a communication device, an office device, a machine tool, or the like. The solution is an effect, a utility, a function, a countermeasure, a service, or the like provided by the device. The abstract concept is an association concept that associates the device with the solution.

Further, platform knowledge is used in the present embodiment.

The platform knowledge indicates a plurality of devices, a plurality of solutions provided by the plurality of devices, and a plurality of abstract concepts that associates the plurality of devices with the plurality of solutions.

Further, in the platform knowledge, each device is correlated to one or more abstract concepts and each solution is correlated to one or more abstract knowledge.

The platform knowledge is information that defines a relation between the device, the solution, and the abstract knowledge, and is equivalent to definition information.

Further, user knowledge is used in the present embodiment.

The user knowledge indicates a device (hereinafter also referred to as a user device) used by a user, a solution (hereinafter also referred to as a user device solution) provided by the user device, and an abstract concept (hereinafter also referred to as a user device abstract concept) that associates the user device with the user device solution. The user device abstract concept is equivalent to a user device association concept.

The user device indicated in the user knowledge is one of devices indicated in the platform knowledge. Further, the user device solution indicated in the user knowledge is one of solutions indicated in the platform knowledge. Further, the user device abstract concept indicated in the user knowledge is one of abstract concepts indicated in the platform knowledge.

The user knowledge is information that defines a relation between the user device, the user device solution, and the user device abstract concept, and is equivalent to user information.

Then, in the present embodiment, a recommendation apparatus 1 to be described below searches for at least one of: a device other than the user device, which is correlated to the user device abstract concept in the platform knowledge; and a solution other than the user device solution, which is correlated to the user device abstract concept in the platform knowledge. Then, the recommendation apparatus 1 presents to the user, the device and/or the solution obtained by the search.

### *** Description of Configuration ***

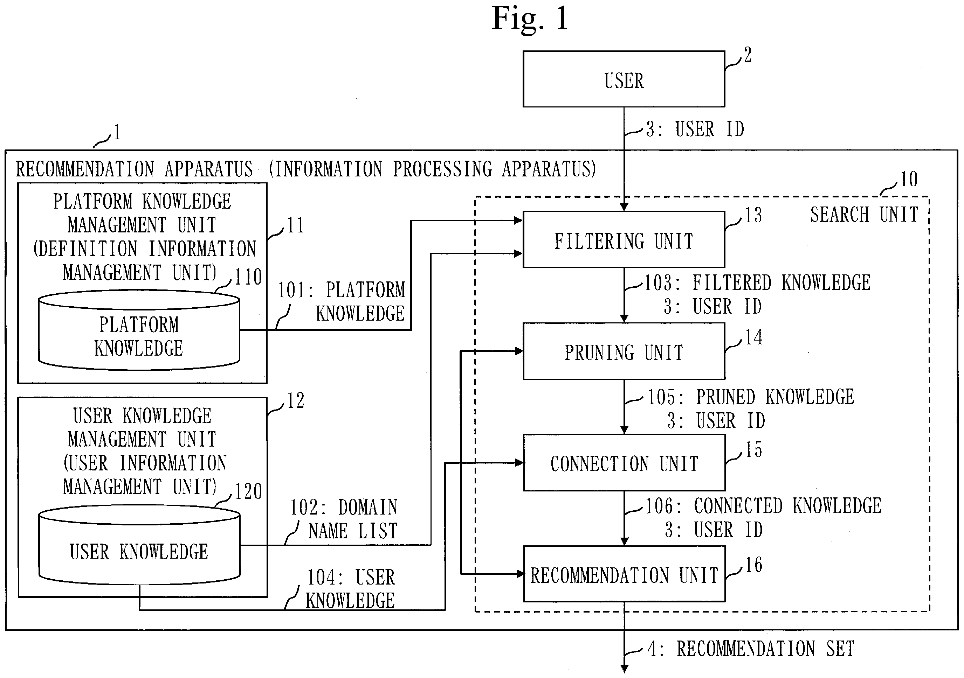

Fig. 1 illustrates a functional configuration example of the recommendation apparatus 1 according to the present embodiment.

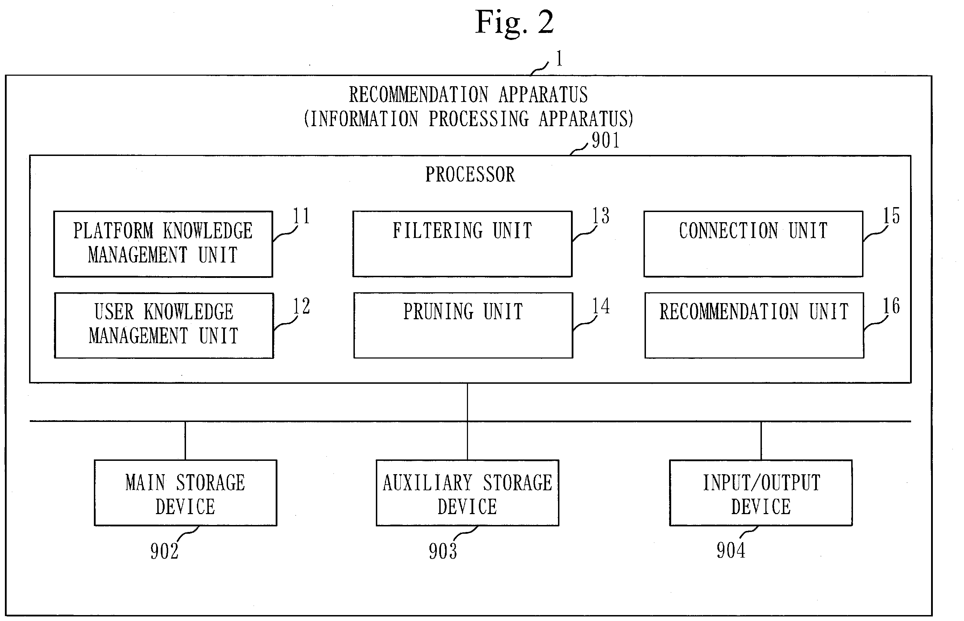

Further, Fig. 2 illustrates a hardware configuration example of the recommendation apparatus 1 according to the present embodiment.

The recommendation apparatus 1 is a computer. The recommendation apparatus 1 may be a server computer in cloud computing or a server computer in edge computing.

The recommendation apparatus 1 is equivalent to an information processing apparatus. Further, an operation procedure of the recommendation apparatus 1 is equivalent to an information processing method. Further, a program that implements operation of the recommendation apparatus 1 is equivalent to an information processing program.

As illustrated in Fig. 1, the recommendation apparatus 1 includes a platform knowledge management unit 11, a user knowledge management unit 12, a filtering unit 13, a pruning unit 14, a connection unit 15, and a recommendation unit 16, as functional configurations.

Further, as illustrated in Fig. 2, the recommendation apparatus 1 includes a processor 901, a main storage device 902, an auxiliary storage device 903, and an input/output device 904, as hardware configurations.

The auxiliary storage device 903 stores programs that implement functions of the platform knowledge management unit 11, the user knowledge management unit 12, the filtering unit 13, the pruning unit 14, the connection unit 15, and the recommendation unit 16.

These programs are loaded from the auxiliary storage device 903 into the main storage device 902. Then, the processor 901 executes these programs and performs operation of the platform knowledge management unit 11, the user knowledge management unit 12, the filtering unit 13, the pruning unit 14, the connection unit 15, and the recommendation unit 16 to be described below.

Fig. 2 schematically illustrates a state where the processor 901 executes the programs that implement the functions of the platform knowledge management unit 11, the user knowledge management unit 12, the filtering unit 13, the pruning unit 14, the connection unit 15, and the recommendation unit 16.

The platform knowledge management unit 11 manages platform knowledge 110. Further, the platform knowledge management unit 11 outputs platform knowledge 101 to the filtering unit 13. The platform knowledge 101 is copied data of the platform knowledge 110.

The platform knowledge management unit 11 is equivalent to a definition information management unit. Further, a process performed by the platform knowledge management unit 11 is equivalent to a definition information management process.

The user knowledge management unit 12 manages user knowledge 120. The user knowledge 120 consists of a plurality of pieces of user knowledge 104 each piece of which is for each user.

The user knowledge management unit 12 is notified of a user ID 3 by the filtering unit 13 and outputs a domain name list 102 corresponding to the user ID 3, to the filtering unit 13. Further, the user knowledge management unit 12 is notified of the user ID 3 by each of the pruning unit 14, the connection unit 15, and the recommendation unit 16, and outputs the user knowledge 104 corresponding to the user ID 3, to each of the pruning unit 14, the connection unit 15, and the recommendation unit 16. Details of the domain name list 102 and the user knowledge 104 will be described below.

The user knowledge management unit 12 is equivalent to a user information management unit. Further, a process performed by the user knowledge management unit 12 is equivalent to a user information management process.

The filtering unit 13 acquires the user ID 3 from a user 2. Further, the filtering unit 13 acquires the platform knowledge 101 from the platform knowledge management unit 11. Further, the filtering unit 13 acquires based on the user ID 3, the domain name list 102 from the user knowledge management unit 12.

Then, the filtering unit 13 performs a filtering process. Specifically, the filtering unit 13 compares the platform knowledge 101 with the domain name list 102 and deletes from the platform knowledge 101, an unnecessary solution, an unnecessary abstract concept, an unnecessary device, or the like.

In addition, the filtering unit 13 outputs to the pruning unit 14, the platform knowledge 101 after deleting the unnecessary solution, the unnecessary abstract concept, the unnecessary device, or the like, as filtered knowledge 103. Further, the filtering unit 13 outputs the user ID 3 to the pruning unit 14.

The pruning unit 14 acquires the filtered knowledge 103 and the user ID 3 from the filtering unit 13. Further, the pruning unit 14 acquires based on the user ID 3, the user knowledge 104 from the user knowledge management unit 12.

Then, the pruning unit 14 performs a pruning process. Specifically, the pruning unit 14 compares the filtered knowledge 103 with the user knowledge 104 and deletes an unnecessary solution, an unnecessary device, or the like.

In addition, the pruning unit 14 outputs to the connection unit 15, the filtered knowledge 103 after deleting the unnecessary solution, the unnecessary device, or the like, as pruned knowledge 105. Further, the pruning unit 14 outputs the user ID 3 to the connection unit 15.

The connection unit 15 acquires the pruned knowledge 105 and the user ID 3, from the pruning unit 14. Further, the connection unit 15 acquires based on the user ID 3, the user knowledge 104 from the user knowledge management unit 12.

Then, the connection unit 15 performs a connecting process. Specifically, the connection unit 15 compares the pruned knowledge 105 with the user knowledge 104, and connects the pruned knowledge 105 to the user knowledge 104, with using a common concept between the pruned knowledge 105 and the user knowledge 104.

In addition, the connection unit 15 outputs to the recommendation unit 16, the connected pruned knowledge 105 and user knowledge 104, as connected knowledge 106. Further, the connection unit 15 outputs the user ID 3 to the recommendation unit 16.

The recommendation unit 16 acquires the connected knowledge 106 and the user ID 3, from the connection unit 15. Further, the recommendation unit 16 acquires based on the user ID 3, the user knowledge 104 from the user knowledge management unit 12.

Then, the recommendation unit 16 performs a recommendation process. Specifically, the recommendation unit 16 searches the connected knowledge 106 for a device and/or a solution that is recommended to the user 2 and that is related to the user device and/or the user device solution.

In addition, the recommendation unit 16 presents to the user 2, the device and/ the solution obtained by the search, as a recommendation set 4.

The filtering unit 13, the pruning unit 14, the connection unit 15, and the recommendation unit 16 are equivalent to a search unit 10. Further, a process performed by the search unit 10 (the filtering unit 13, the pruning unit 14, the connection unit 15, and the recommendation unit 16) is equivalent to a search process.

Next, a conceptual hierarchy 1001 used in the platform knowledge 110 and the user knowledge 120 will be described.

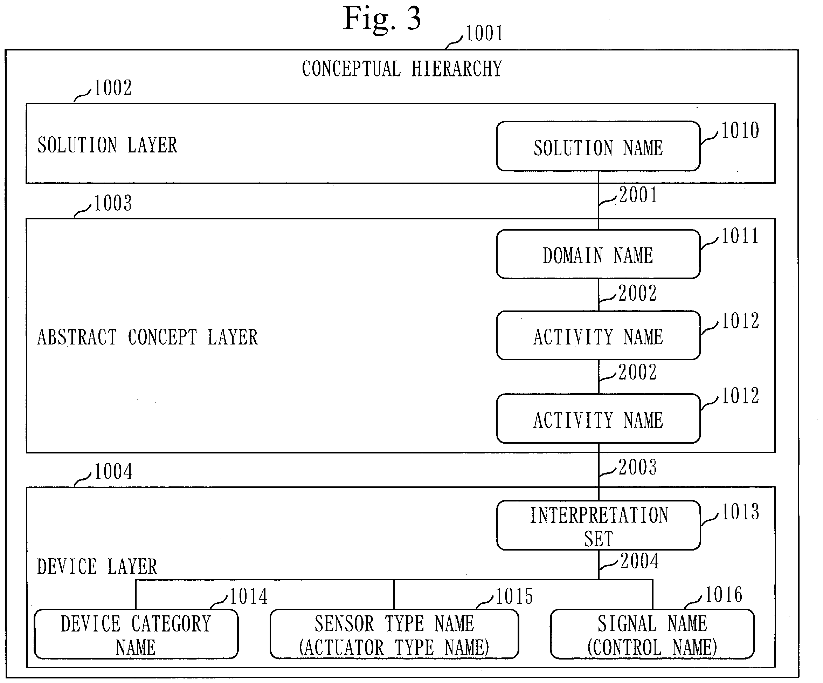

Fig. 3 illustrates an example of the conceptual hierarchy 1001. In the present embodiment, the platform knowledge 110 and the user knowledge 120 define based on the conceptual hierarchy 1001 exemplified in Fig. 3, the solution, the device, and the abstract concept (the association concept).

The conceptual hierarchy 100 is configured with a solution layer 1002, an abstract concept layer 1003, and a device layer 1004. The conceptual hierarchy 1001 is able to express a semantic connection between the solution and the device, by correlating each of a solution name 1010 and an interpretation set 1013 to be described below to one of layers of the abstract concept defined in the abstract concept layer 1003.

The solution layer 1002 includes one or more solution names 1010. The solution name 1010 is used to identify the solution provided by the device.

As the solution name 1010, for example, there is "watching", "intrusion detection", "comfort control", or the like.

Further, the solution name 1010 is connected to one of layers of the abstract concept layer 1003 via a link 2001. The solution name 1010 is connected to a sensor (actuator) type name 1015 via the link 2001, the abstract concept layer 1003, a link 2003, the interpretation set 1013, and a link 2004. As a result, the solution indicated in the solution name 1010 is correlated to a sensor that recognizes a real environment and/or an actuator that controls the real environment.

The solution name 1010 may be expressed hierarchically with using a synonym dictionary such as a thesaurus.

The abstract concept layer 1003 includes one or more abstract concepts. In the present embodiment, each of one or more domain names 1011 and one or more activity names 1012 is the abstract concept.

Further, the abstract concept layer 1003 includes a link 2002 that connects abstract concepts. For example, the link 2002 connects the domain name 1011 to the activity name 1012 and connects the activity name 1012 to the activity name 1012. A connection by the link 2002 expresses a relation between the abstract concepts.

The domain name 1011 is a highest superordinate concept in the abstract concept layer 1003 and is a superordinate concept of the activity names 1012. The domain name 1011 is used to identify types of the activity names 1012 lined up as subordinate concepts. Further, a human activity or an operation of a device may be written as the domain name 1011. For example, "vital activity", "crime prevention activity", "childcare activity", or the like may be written as the human activity.

As illustrated in Fig. 3, the activity names 1012 are written hierarchically as the subordinate concepts of the domain name 1011.

The device layer 1004 includes one or more interpretation sets 1013. Then, each interpretation set 1013 is connected to one or more device category names 1014, one or more sensor (actuator) type names 1015, and one or more signal (control) names 1016, via the link 2004.

The interpretation set 1013 is equivalent to a superordinate concept that integrates the device category name 1014, the sensor (actuator) type name 1015, and the signal (control) name 1016.

The device category name 1014 is used to identify a type of the device. For example, "air conditioner", "refrigerator", "rice cooker", or the like is written as the device category name 1014.

The sensor (actuator) type name 1015 is used to identify a type of the sensor (actuator). For example, "infrared sensor", "temperature sensor", "motor", or the like is written as the sensor (actuator) type name 1015.

The signal (control) name 1016 is used to identify a type of a signal (control) output by the sensor (actuator). For example, "ON/OFF", "distance", "temperature", "rotation", or the like is written as the signal (control) name 1016.

In the following, the solution name 1010, the domain name 1011, the activity name 1012, the interpretation set 1013, the device category name 1014, the sensor (actuator) type name 1015, and the signal (control) name 1016 are collectively referred to as a node.

Further, the solution name 1010, the domain name 1011, the activity name 1012, and the like included in the platform knowledge 110 are also collectively referred to as a node. The solution name 1010, the domain name 1011, the activity name 1012, and the like included in the user knowledge 120 are also collectively referred to as a node.

A solution written in the solution name 1010 of the user knowledge 120 or the user knowledge 104 is the user device solution. Further, an abstract concept written in the domain name 1011 or the activity name 1012 of the user knowledge 120 or the user knowledge 104 is the user device abstract concept. Further, a device written in the device category name 1014 of the user knowledge 120 or the user knowledge 104 is the user device.

### *** Description of Operation ***

Next, an operation example of the recommendation apparatus 1 according to the present embodiment will be described.

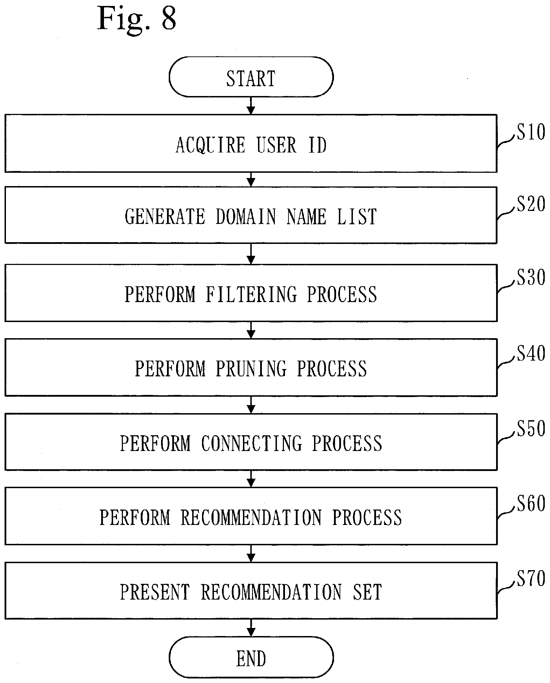

Fig. 8 is a flowchart illustrating the operation example of the recommendation apparatus 1 according to the present embodiment.

First, the filtering unit 13 acquires the user ID 3 from the user 2 (step S10).

For example, the user 2 inputs the user ID 3 with using the input/output device 904 in Fig. 2, and the filtering unit 13 acquires the user ID 3 input by the user 2.

Next, the user knowledge management unit 12 generates the domain name list 102 (step S20).

Specifically, the filtering unit 13 notifies the user knowledge management unit 12 of the user ID 3 acquired from the user 2.

The user knowledge management unit 12 specifies the user knowledge 104 corresponding to the user ID 3 notified by the filtering unit 13.

Next, the user knowledge management unit 12 acquires one or more domain names 1011 from the specified user knowledge 104 and generates the domain name list 102 by listing the acquired domain names 1011. At this time, when there is no domain name 1011 in the user knowledge 104, the user knowledge management unit 12 traces a route of the activity name 1012 and acquires the domain name 1011.

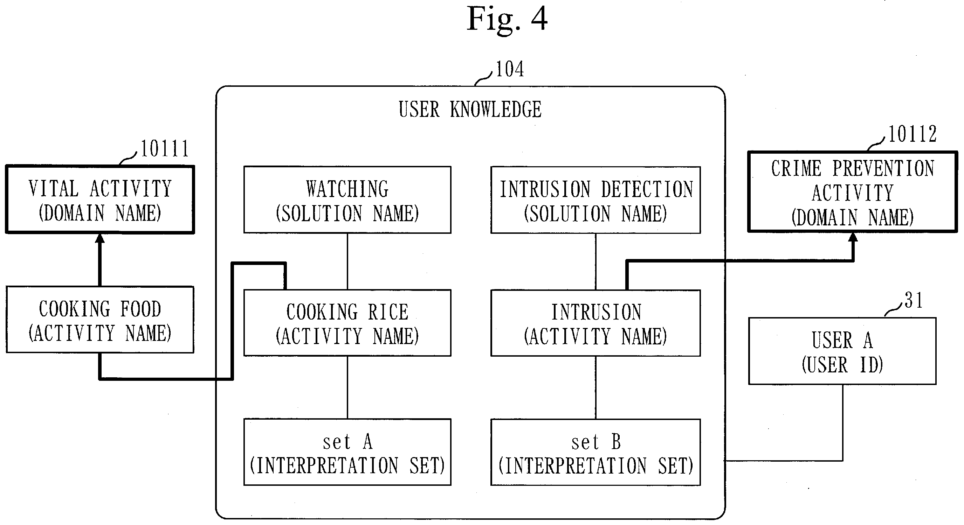

Fig. 4 illustrates an example of generating the domain name list 102 by the user knowledge management unit 12. In the example of Fig. 4, it is assumed that a user ID 31 of a user A is acquired as the user ID 3.

As illustrated in Fig. 4, the user knowledge 104 corresponding to the user ID 31 does not include the domain name 1011. Therefore, the user knowledge management unit 12 acquires "vital activity" 10111 which is the domain name correlated to the activity name 1012 "cooking rice" in the platform knowledge 110. In addition, the user knowledge management unit 12 acquires "crime prevention activity" 10112 which is the domain name correlated to an activity name "intrusion" in the platform knowledge 110. Then, the user knowledge management unit 12 generates the domain name list 102 that indicates the acquired "vital activity" 10111 and the acquired "crime prevention activity" 10112.

The user knowledge management unit 12 outputs the generated domain name list 102 to the filtering unit 13.

Next, the filtering unit 13 performs the filtering process (step S30).

Specifically, the filtering unit 13 performs the filtering process as follows.

First, the filtering unit 13 acquires the domain name list 102 from the user knowledge management unit 12. Further, the filtering unit 13 acquires the platform knowledge 101 from the platform knowledge management unit 11. As described above, the platform knowledge 101 is copied data of the platform knowledge 110.

Then, the filtering unit 13 deletes from the platform knowledge 101, the conceptual hierarchy 1001 including the domain name 1011 that differs from the domain name 1011 indicated in the domain name list 102.

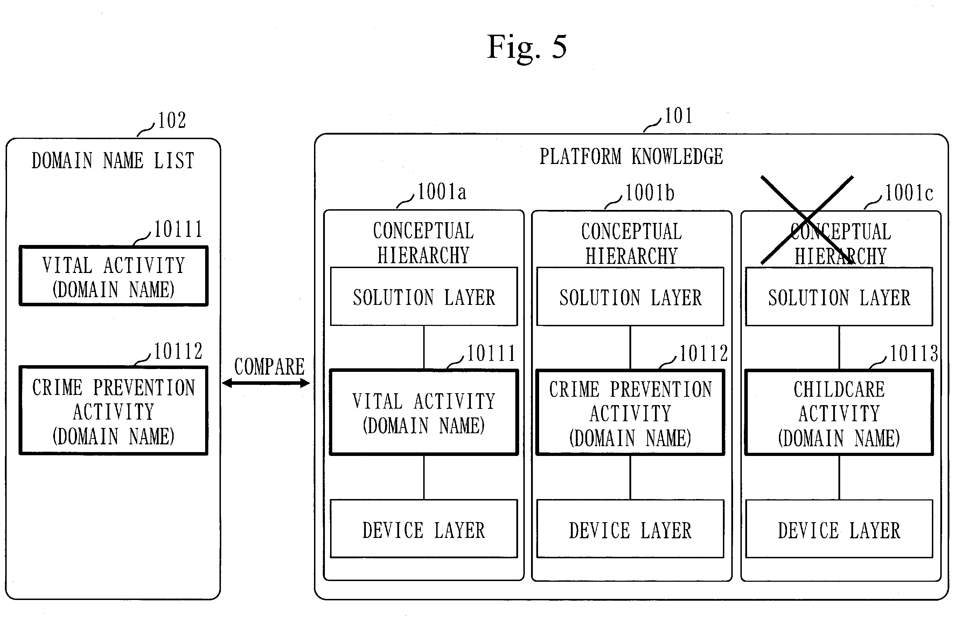

Fig. 5 illustrates an example of the filtering process performed by the filtering unit 13.

In the example of Fig. 5, the domain name list 102 indicates "vital activity" 10111 and "crime prevention activity" 10112. The platform knowledge 101 includes a conceptual hierarchy 1001a, a conceptual hierarchy 1001b, and a conceptual hierarchy 1001c. The filtering unit 13 deletes the conceptual hierarchy 1001c including "childcare activity" 10113 that is not consistent with "vital activity" 10111 or "crime prevention activity" 10112 in the domain name list 102.

That is, "childcare activity" 10113 is not related to any of the user device and the user device solution. Therefore, the filtering unit 13 determines that a device and a solution correlated to "childcare activity" 10113 are unnecessary to be recommended to the user 2 and deletes from the platform knowledge 101, the conceptual hierarchy 1001c including "childcare activity" 10113.

In this way, the filtering unit 13 excludes from a subject for a search, a device and a solution correlated to an abstract concept other than the user device abstract concept in the platform knowledge 101.

After the filtering process, the filtering unit 13 outputs to the pruning unit 14, the platform knowledge 101 after the filtering process, as the filtered knowledge 103. Further, the filtering unit 13 also outputs the user ID 3 to the pruning unit 14.

Next, the pruning unit 14 performs the pruning process (step S40).

Specifically, the pruning unit 14 performs the pruning process as follows. The pruning process is a process of generating the conceptual hierarchy 1001 exclusively for the user.

First, the pruning unit 14 acquires from the filtering unit 13, the filtered knowledge 103 and the user ID 3. Further, the pruning unit 14 notifies the user knowledge management unit 12 of the user ID 3 and acquires from the user knowledge management unit 12, the user knowledge 104 corresponding to the user ID 3.

Next, with using the user knowledge 104, the pruning unit 14 deletes from the filtered knowledge 103, the solution layer 1002 and the device layer 1004 that are unnecessary to be recommended. Specifically, the pruning unit 14 deletes from the filtered knowledge 103, the solution layer 1002 describing the same solution as the user device solution included in the user knowledge 104 and also deletes the device layer 1004 which is connected to the deleted solution layer 1002 via the abstract concept layer 1003.

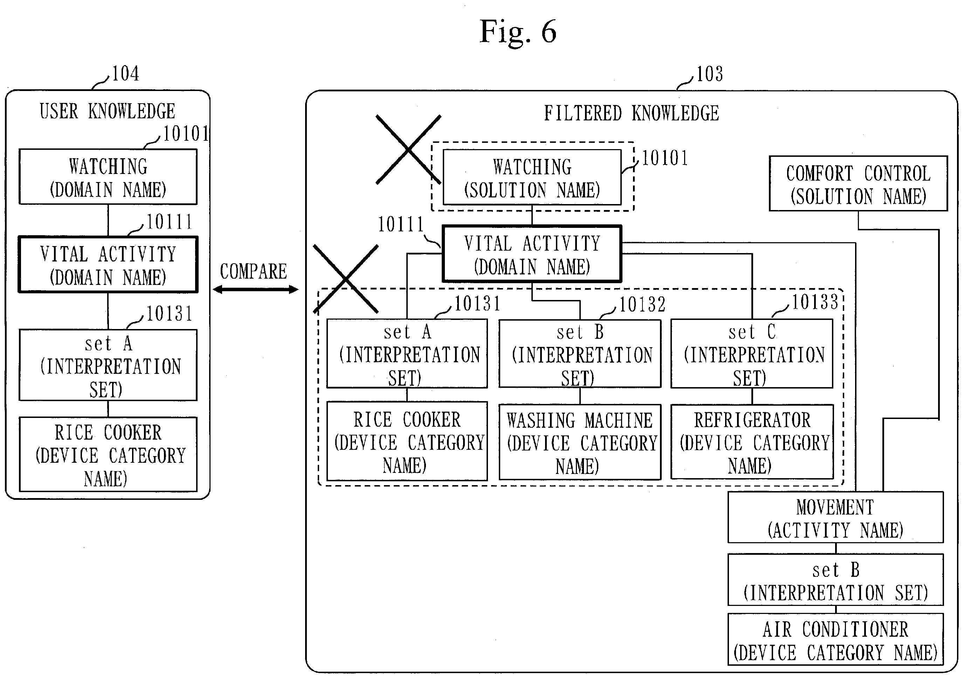

Fig. 6 illustrates an example of the pruning process performed by the pruning unit 14.

In Fig. 6, the user knowledge 104 includes the domain name "vital activity" 10111 and also includes a solution name "watching" 10101.

In Fig. 5, the domain name list 102 includes "vital activity" 10111 and "crime prevention activity" 10112. Therefore, although it is not illustrated, the user knowledge 104 in Fig. 6 includes "crime prevention activity" 10112 in addition to the domain name "vital activity" 10111. Similarly, the platform knowledge 101 in Fig. 5 also includes the conceptual hierarchy 1001b regarding "crime prevention activity" 10112. Therefore, although it is not illustrated, the filtered knowledge 103 in Fig. 6 also includes the conceptual hierarchy 1001b regarding "crime prevention activity" 10112. For depiction convenience, Fig. 6 illustrates only nodes relating to the domain name "vital activity" 10111. Further, in the following description, only the domain name "vital activity" 10111 will be described for simplifying the description.

The pruning unit 14 extracts in the filtered knowledge 103, the domain name "vital activity" 10111 which is the same as the domain name "vital activity" 10111 included in the user knowledge 104. Then, the pruning unit 14 extracts from among the solution names 1010 connected to the extracted domain name "vital activity" 10111, the solution name "watching" 10101 which is the same as the solution name "watching" 10101 included in the user knowledge 104. Further, the pruning unit 14 extracts in the filtered knowledge 103, the device layer 1004 ("set A" 1031, "set B" 1032, "set C" 1033, "rice cooker", "washing machine", and "refrigerator") connected to the solution name "watching" 10101 via the domain name "vital activity" 10111. Then, the pruning unit 14 deletes from the filtered knowledge 103, the extracted solution name "watching" 10101 and the extracted device layer 1004. That is, the pruning unit 14 deletes from the filtered knowledge 103, the range enclosed by the dashed line in Fig. 6. The solution name "watching" 10101 is the solution that has been already recognized by the user 2. Further, the device layer 1004 in the range enclosed by the dashed line in Fig. 6 is the device layer 1004 for the device relating to the solution ("watching") that has been already recognized by the user 2. Therefore, the pruning unit 14 determines that these solution and device are not necessary to be newly recommended to the user 2 and excludes these solution and device from a subject for a recommendation. The sensor (actuator) type name 1015 and the signal (control) name 1016 illustrated in Fig. 3 are not illustrated in Fig. 6 for simplifying the drawing. The pruning unit 14 also deletes the sensor (actuator) type name 1015 and the signal (control) name 1016.

On the other hand, the pruning unit 14 does not delete the activity name "movement" connected to the domain name "vital activity" 10111, an interpretation set "set B" connected to the activity name "movement", the device category name "air conditioner", and the solution name "comfort control", in the filtered knowledge 103.

In this way, the pruning unit 14 excludes from the subject for the search, the user device solution ("watching" 10101) correlated to the user device abstract concept ("vital activity" 10111) and the devices ("rice cooker", "washing machine", and "refrigerator") correlated to the user device solution ("watching" 10101) via the user device abstract concept ("vital activity" 10111), in the filtered knowledge 103.

After the pruning process, the pruning unit 14 outputs to the connection unit 15, the filtered knowledge 103 after the pruning process, as the pruned knowledge 105. Further, the pruning unit 14 also outputs the user ID 3 to the connection unit 15.

Next, the connection unit 15 performs the connecting process (step S50).

Specifically, the connection unit 15 performs the connecting process as follows.

First, the connection unit 15 acquires from the pruning unit 14, the pruned knowledge 105 and the user ID 3. Further, the connection unit 15 notifies the user knowledge management unit 12 of the user ID 3 and acquires from the user knowledge management unit 12, the user knowledge 104 corresponding to the user ID 3.

Next, the connection unit 15 performs an additive operation on the user knowledge 104 and the pruned knowledge 105. Specifically, the connection unit 15 connects the user knowledge 104 to the pruned knowledge 105, with using the user device abstract concept included in the user knowledge 104 and the same abstract concept as the included user device abstract concept.

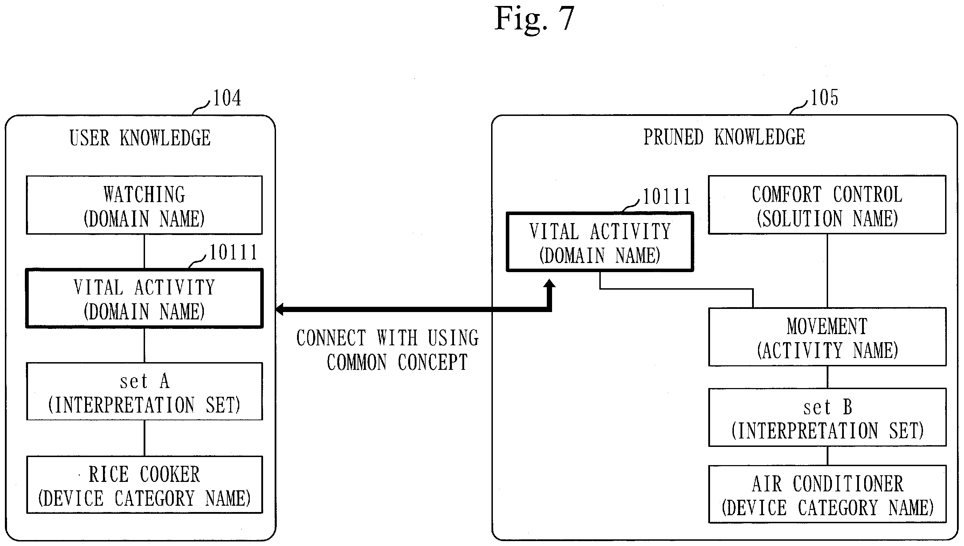

Fig. 7 illustrates an example of the connecting process performed by the connection unit 15.

The user knowledge 104 illustrated in Fig. 7 is the same as the user knowledge 104 illustrated in Fig. 6. As described regarding Fig. 6, the user knowledge 104 includes "crime prevention activity" 10112 in addition to the domain name "vital activity" 10 111, but only the domain name "vital activity" 10111 is illustrated for simplifying the description.

The connection unit 15 connects the user knowledge 104 to the pruned knowledge 105, by connecting the domain name "vital activity" 10111 which is the user device abstract concept in the user knowledge 104, to the domain name "vital activity" 10111 included in the pruned knowledge 105.

The connection unit 15 outputs to the recommendation unit 16, the connected user knowledge 104 and pruned knowledge 105, as the connected knowledge 106. Further, the connection unit 15 also outputs the user ID 3 to the recommendation unit 16.

Next, the recommendation unit 16 performs the recommendation process (step S60).

Specifically, the recommendation unit 16 performs the recommendation process as follows.

First, the recommendation unit 16 acquires from the connection unit 15, the connected knowledge 106 and the user ID 3. Further, the recommendation unit 16 notifies the user knowledge management unit 12 of the user ID 3 and acquires from the user knowledge management unit 12, the user knowledge 104 corresponding to the user ID 3.

Next, the recommendation unit 16 compares the user knowledge 104 with the connected knowledge 106. For example, the recommendation unit 16 searches the connected knowledge 106 for a device other than the user device, which is correlated to the user device abstract concept. Further, for example, the recommendation unit 16 searches the connected knowledge 106 for a solution other than the user device solution, which is correlated to the user device abstract concept.

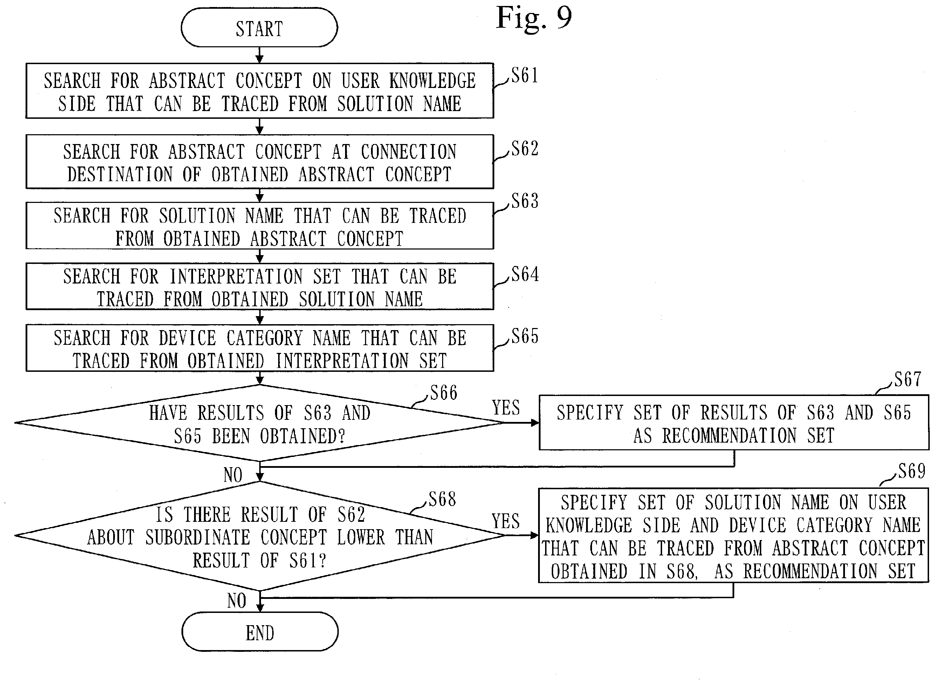

Fig. 9 illustrates details of the recommendation process (step S60) performed by the recommendation unit 16.

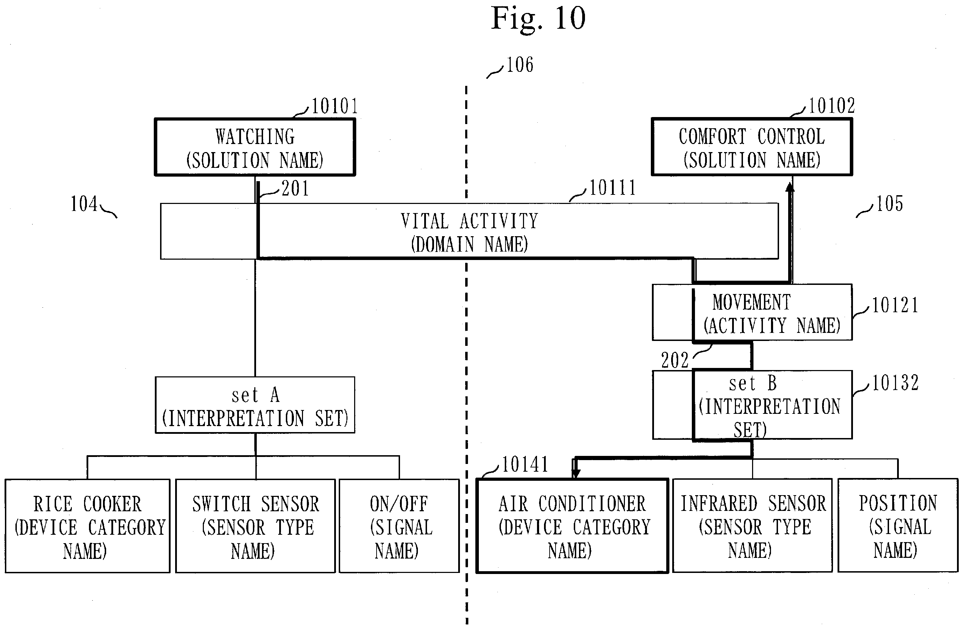

Further, Fig. 10 illustrates a specific example of the recommendation process performed by the recommendation unit 16.

In the following, the flow in Fig. 9 will be described with reference to the specific example of Fig. 10.

First, the recommendation unit 16 searches for the abstract concept 1003 on the user knowledge 104 side that can be traced from the solution name 1010 on the user knowledge 104 side of the connected knowledge 106 (step S61).

In the example of Fig. 10, as a result of the search, the recommendation unit 16 obtains the domain name "vital activity" 10111 connected to the solution name "watching" 10101 on the user knowledge 104 side of the connected knowledge 106.

Next, the recommendation unit 16 searches for an abstract concept at a connection destination of the abstract concept obtained by the search of step S61 (step S62).

The abstract concept at the connection destination is an abstract concept which is on the pruned knowledge 105 side and is connected to the abstract concept obtained by the search of step S61. In the example of Fig. 10, the domain name "vital activity" 10111 is equivalent to the abstract concept on the pruned knowledge 105 side.

Next, the recommendation unit 16 searches for the solution name 1010 that can be traced from the abstract concept obtained by the search of step S62 (step S63).

In the example of Fig. 10, as a result of the search, the recommendation unit 16 obtains a solution name "comfort control" 10102 that can be traced from the domain name "vital activity" 10111 via an activity name "movement" 10121.

An inference 201 in Fig. 10 represents results of the searches from step S61 to step S63.

Next, the recommendation unit 16 searches for the interpretation set 1013 that can be traced from the solution name 1010 obtained by the search of step S63 (step S64).

In the example of Fig. 10, the recommendation unit 16 obtains an interpretation set "set B" 10132 that can be traced from the solution name "comfort control" 10102 via the activity name "movement" 10121.

Next, the recommendation unit 16 searches for the device category name 1014 that can be traced from the interpretation set 10132 obtained by the search of step S64 (step S65).

In the example of Fig. 10, the recommendation unit 16 acquires a device category name "air conditioner" 10141 that can be traced from the interpretation set "set B" 10132.

An inference 202 in Fig. 10 represents results of the searches from step S64 to step S65.

Next, the recommendation unit 16 determines whether or not a result has been obtained in each of the search of step S63 and the search of step S65 (step S66).

When the result has been obtained in each of the search of step S63 and the search of step S65, the process proceeds to step S67.

On the other hand, when the result has not been obtained in at least one of the search of step S63 and the search of step S65, the process proceeds to step S68.

In step S67, the recommendation unit 16 specifies a set of the result (the solution name 1010) of the search of step S63 and the result (the device category name 1014) of the search of step S65, as the recommendation set 4.

In the example of Fig. 10, the recommendation unit 16 specifies a set of the solution name "comfort control" 10102 and the device category name "air conditioner" 10141, as the recommendation set 4.

After step S67, the process proceeds to step S68.

In step S68, the recommendation unit 16 determines whether or not there is a result of step S62 about a subordinate concept lower than a result of step S61. That is, the recommendation unit 16 determines whether or not there is an abstract concept that is a subordinate concept lower than the abstract concept obtained by the search of step S61, in abstract concepts on the pruned knowledge 105 side.

When there is the abstract concept of the subordinate concept on the pruned knowledge 105 side, the process proceeds to step S69.

On the other hand, when there is no abstract concept of the subordinate concept on the pruned knowledge 105 side, the flow of Fig. 9 ends.

In the example of Fig. 10, the abstract concept obtained in step S61 is "vital activity". Further, on the pruned knowledge 105 side, there is "movement" as the abstract concept which corresponds to the subordinate concept of "vital activity". Therefore, in the example of Fig. 10, the process proceeds to step S69.

In step S68, the recommendation unit 16 determines whether or not new knowledge (especially a device) obtained through the pruning process can be applied to a solution which has been already provided to the user. In the example of Fig. 10, as the new device, "air conditioner" is obtained. The abstract concept tied to "air conditioner" is "movement. If "movement" is abstracted, it can be interpreted as "vital activity" ("movement" is the subordinate concept of "vital activity"). The solution "watching" which has been already provided to the user is a solution that requires "vital activity". Therefore, the recommendation unit 16 determines that "air conditioner" newly obtained can be applied to the solution "watching". The pruning process excludes a device or the like that is tied to the abstract concept that has been already sensed. However, "movement" clears a minimum level of an abstract degree required by "watching" and it is possible to notify the user of more specific information than "vital activity", so that a recommendation is made in step S69.

In step S69, the recommendation unit 16 specifies a set of the solution name 1010 on the user knowledge 104 side and the device category name 1014 that can be traced from the abstract concept obtained in step S68, as the recommendation set 4.

In the example of Fig. 10, the recommendation unit 16 specifies a set of the solution name "watching" 10101 and the device category name "air conditioner" 10141, as the recommendation set 4.

After the above processes, in step S70 of Fig. 8, the recommendation unit 16 outputs to the input/output device 904, the recommendation set 4 specified in step S67 and/or step S69 of Fig. 9 and presents the recommendation set 4 to the user.

In the present embodiment, it is assumed that the recommendation unit 16 presents the set of the solution and the device, as the recommendation set 4. Alternatively, the recommendation unit 16 may present either the solution or the device only. In the example of Fig. 10, the recommendation unit 16 may present only the solution name "comfort control" 10102, as the solution that may be implemented by the user device, together with the solution name "watching" 10101 which is the user device solution. Further, the recommendation unit 16 may present only the device category name "air conditioner" 10141, as the device other than the user device that may be applied to the solution name "watching" 10101 which is the user device solution.

### *** Description of Effect of This Embodiment ***

According to the present embodiment, it is possible to search for at least one of a device and a solution that are related to at least one of a device used by a user and a solution provided by the device used by the user. As a result, according to the present embodiment, it is possible to recommend to the user, at least one of the device and the solution that are related to at least one of the device used by the user and the solution provided by the device used by the user.

Further, in the present embodiment, in order to recommend the solution and/or the device to the user 2, dedicated knowledge for the user 2 is generated with using the platform knowledge 101 and the user knowledge 104, and search space for a search for a recommendation is reduced. As a result, according to the present embodiment, it is possible to recommend the solution and/or the device that is desired by the user 2, with high accuracy and in a short time.

That is, based the abstract concept layer 1003, the recommendation apparatus 1 according to the present embodiment reduces from the platform knowledge 101, the search space unnecessary for the recommendation, with using information on the solution and information on the device that have been already introduced and that are held in the user knowledge 104, so that the recommendation is realized with high accuracy and in a short time.

Further, in the present embodiment, by tying the solution name 1010 and the interpretation set 1013 to any layer of the abstract concept, it is possible to realize an abstraction degree (intention) of a real environment that the solution intends to sense or actuate. Therefore, it is possible to control the accuracy of the recommendation.

### <Modification 1>

In Embodiment 1, the filtering unit 13 acquires the domain name list 102 from the user knowledge management unit 12. In addition to this, the filtering unit 13 may acquire the domain name list 102 from the user 2. The domain name list 102 acquired from the user 2 indicates an abstract concept (equivalent to a user specified association concept) that is specified by the user 2 and that is not included in the domain name list 102 provided by the user knowledge management unit 12.

In Modification 1, the filtering unit 13 functions as an acquisition unit.

In Embodiment 1, the recommendation unit 16 is able to include in the recommendation set 4, only the solution name 1010 and the device category name 1014 that can be traced from the domain name 1011 included in the user knowledge 104. In Modification 1, the recommendation unit 16 is able to trace the solution name 1010 and the device category name 1014 starting from the domain name 1011 specified by the user 2, and is able to include in the recommendation set 4, the solution name 1010 and the device category name 1014 that cannot be traced from the domain name 1011 included in the user knowledge 104.

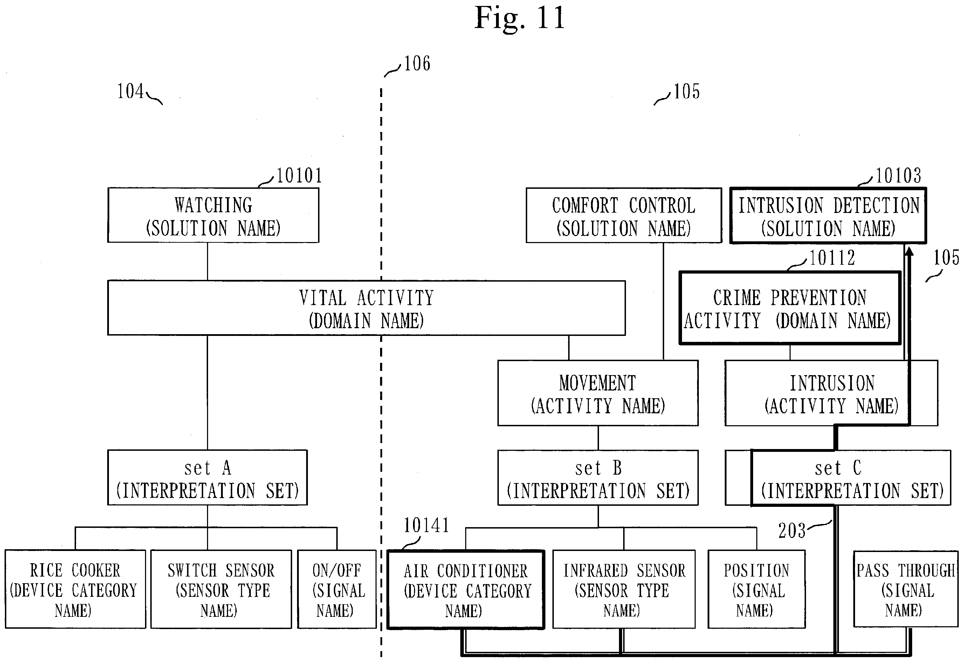

For example, it is assumed that the filtering unit 13 acquires from the user 2, the domain name list 102 in which "crime prevention activity" 10112 is specified. In this case, as illustrated in Fig. 11, the recommendation unit 16 is able to draw an inference 203 that utilizes "air conditioner" 10141 in "crime prevention activity" 10112 which is another domain. As a result, the recommendation unit 16 is able to recommend a solution name "intrusion detection" 10103 that has not been obtained in the example of Fig. 10.

The recommendation process of the recommendation unit 16 in Modification 1 is realized by performing the processes from step S63 onwards, with using the domain name 1011 specified by the user 2, instead of the domain name 1011 obtained by the search of step S62 in Fig. 9.

### <Modification 2>

The pruning unit 14 may determine a conflicting relation between the solution names 1010 and delete the solution name 1010, the interpretation set 1013, the device category name 1014, or the like that is unnecessary for a recommendation. The conflicting relation here means a relation in which two or more solutions cannot be executed at the same time since devices corresponding to the two or more solutions are the same.

That is, when the pruning unit 14 obtains two or more solutions as a result of searching the platform knowledge 101 for a solution other than the user device solution, which is correlated to the user device abstract concept in step S40 of Fig. 8, the pruning unit 14 searches for a device correlated to each of the two or more solutions via the user device abstract concept. Then, when the devices obtained by the search are the same devices, the pruning unit 14 determines that the two or more solutions are in the conflicting relation.

Then, the pruning unit 14 deletes one or more of the two or more solutions in the conflicting relation.

Further, the recommendation unit 16 may determine a conflicting relation between the recommendation sets 4 and decide the final recommendation set 4. The conflicting relation here means a relation in which two or more solutions included in two or more recommendation sets 4 cannot be executed at the same time since two or more devices included in the two or more recommendation sets 4 are the same.

When the recommendation unit 16 obtains two or more recommendation sets 4 after performing the search for the recommendation set 4 in step S60 of Fig. 8, and two or more devices included in the two or more recommendation sets 4 are the same devices, the recommendation unit 16 determines that the two or more recommendation sets 4, in other words, two or more solutions and the two or more devices included in the two or more recommendation sets 4 are in the conflicting relation.

Then, the recommendation unit 16 deletes one or more of the two or more recommendation sets 4 which are in the conflicting relation.

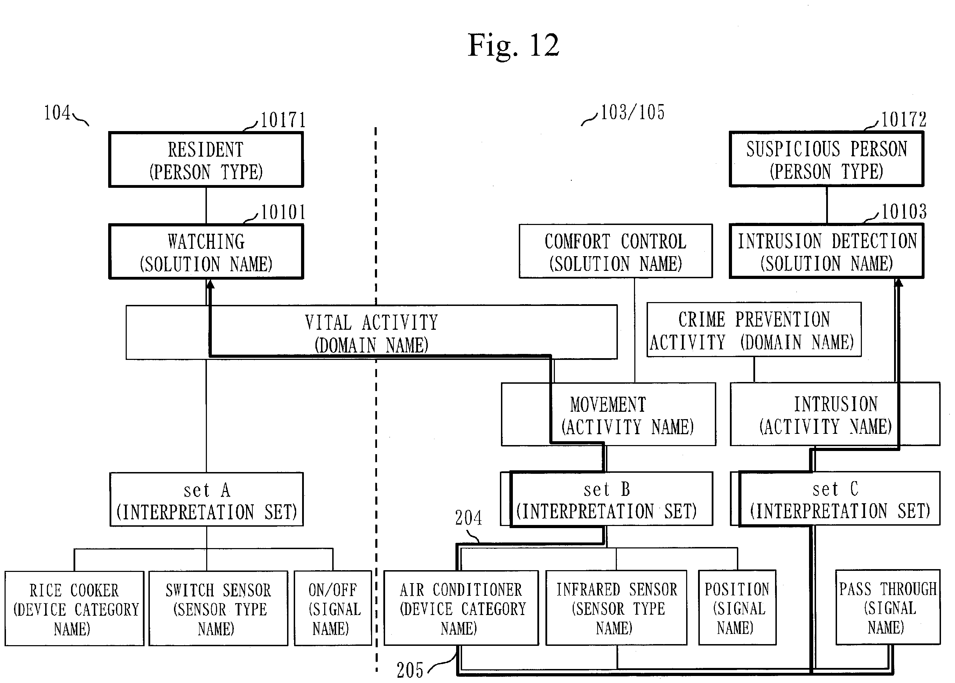

Fig. 12 illustrates an operation example of the pruning unit 14 and the recommendation unit 16 according to Modification 2.

In the example of Fig. 12, person types ("resident" 10171 and "suspicious person" 10172) are added to the abstract concept layer 1003. Then, the person type is connected to any of the solution names 1010. In the example of Fig. 12, the person type "resident" 10171 is connected to the solution name "watching" 10101. Further, the person type "suspicious person" 10172 is connected to the solution name "intrusion detection" 10103. Then, when two or more solution names 1010 to which a different person type 1017 is connected are provided with the same device category names 1014 as can be traced by an inference 204 and an inference 205, each of the pruning unit 14 and the recommendation unit 16 determines that such a relation is the conflicting relation.

According to Modification 2, the pruning unit 14 determines the conflicting relation between the two or more solutions, so that the search space is reduced compared with Embodiment 1 and therefore it is possible to realize the recommendation in a shorter time.

Further, according to Modification 2, the recommendation unit 16 determines the conflicting relation between the two or more recommendation sets 4, so that the accuracy of the recommendation is improved compared with Embodiment 1.

### <Modification 3>

The pruning unit 14 may determine a usage place of a device and a specification of the device and delete the solution name 1010, the interpretation set 1013, the device category name 1014, or the like that is unnecessary for a recommendation.

In Modification 3, it is assumed that the platform knowledge 101 indicates the usage place of each device. Further, it is assumed that the user knowledge 104 indicates the usage place of the user device, as a user device usage place. The user device usage place is one of usage places indicated in the platform knowledge 101. Then, in step S40 of Fig. 8, the pruning unit 14 deletes the device category name 1014 of a device whose usage place indicated in the platform knowledge 101 is not consistent with the user device usage place.

Further, in Modification 3, it is assumed that the platform knowledge 101 indicates the specification of each device. Further, it is assumed that the user knowledge 104 indicates the specification of the user device, as a user device specification. The user device specification is one of specifications indicated in the platform knowledge 101. Then, in step S40 of Fig. 8, the pruning unit 14 deletes the device category name 1014 of a device whose specification indicated in the platform knowledge 101 is not consistent with the user device specification.

Further, the recommendation unit 16 may also determine the usage place of the device and the specification of the device, and select the recommendation set 4.

That is, in step S65 of Fig. 9, the recommendation unit 16 searches the connected knowledge 106 for a device that corresponds to the solution obtained by the search of step S63 and whose usage place is consistent with the user device usage place. The recommendation unit 16 may include the device obtained by the search in the recommendation set 4.

Further, in step S65 of Fig. 9, the recommendation unit 16 searches the connected knowledge 106 for a device that corresponds to the solution obtained by the search of step S63 and whose specification is consistent with the user device specification. The recommendation unit 16 may include the device obtained by the search in the recommendation set 4.

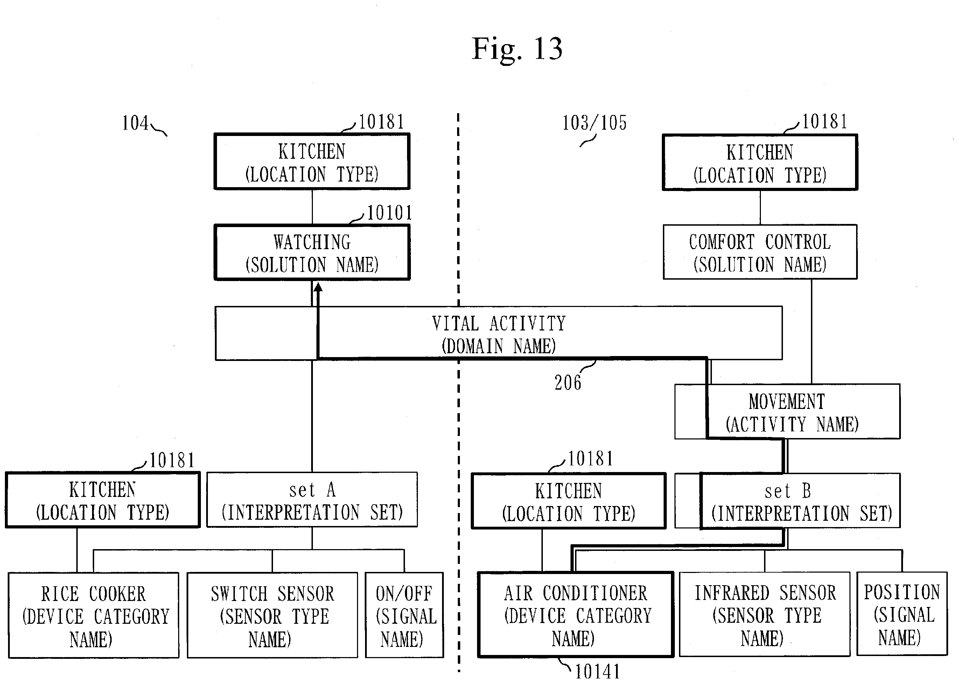

Fig. 13 illustrates an operation example of the pruning unit 14 and the recommendation unit 16 according to Modification 3.

In the example of Fig. 13, a location type ("kitchen" 10181) indicating the usage place is added to the higher level of the solution. Further, the location type ("kitchen" 10181) is added also to the abstract concept layer 1003. In the user knowledge 104, the location type "kitchen" 10181 is connected to the higher level of "watching" 10101, as a place where "watching" is realized. In addition, the location type "kitchen" 10181 is connected to "rice cooker", as the usage place where "rice cooker" is used which is the user device corresponding to "watching" 10101. Further, in the filtered knowledge 103, the location type "kitchen" 10181 is connected to the higher level of "comfort control", as a place where "comfort control" is realized. In addition, the location type "kitchen" 10181 is connected to "air conditioner" 10141, as the usage place of "air conditioner".

In the example of Fig. 13, the device category name "air conditioner" 10141 is extracted based on the solution name "watching" 10101 by an inference 206. In step S40 of Fig. 9, the pruning unit 14 determines whether or not the location type "kitchen" 10181 connected to "rice cooker" that is subordinate to "watching" 10101 is also connected to the device category name "air conditioner" 10141. When the location type "kitchen" 10181 is not connected to the device category name "air conditioner" 10141, the pruning unit 14 deletes the device category name "air conditioner" 10141.

Similarly, when the recommendation unit 16 obtains the solution name "comfort control" in step S63 of Fig. 9, the recommendation unit 16 also determines in step S65, whether or not the location type "kitchen" 10181 is connected to the device category name "air conditioner" 10141 that is subordinate to "comfort control". When the location type "kitchen" 10181 is connected to the device category name "air conditioner" 10141, the recommendation unit 16 includes the device category name "air conditioner" 10141 in the recommendation set 4.

When the specification of the device is used, "specification type" which is a node regarding the specification of the device is added to a position of the location type, instead of the location type in Fig. 13.

Then, the pruning unit 14 determines whether or not the same node as "specification type" connected to "rice cooker" is also connected to the device category name "air conditioner" 10141. When the same node as "specification type" is not connected to the device category name "air conditioner" 10141, the pruning unit 14 deletes the device category name "air conditioner" 10141.

Further, the recommendation unit 16 determines whether or not the same node as "specification type" connected to "rice cooker" is also connected to the device category name "air conditioner" 10141. When the same node as "specification type" is connected to the device category name "air conditioner" 10141, the pruning unit 14 includes the device category name "air conditioner" 10141 in the recommendation set 4.

According to Modification 3, a request of the user 2 regarding the usage place and/or the specification can be reflected to the recommendation.

Therefore, the pruning unit 14 is able to delete the solution name 1010 and/or the device category name 1014 that is not able to satisfy the request of the user 2. Further, the recommendation unit 16 is able to present to the user 2, the solution name 1010 and/or the device category name 1014 that is not able to satisfy the request of the user 2.

Further, according to Modification 3, the solution name 1010 and/or the device category name 1014 is deleted that is not able to satisfy the request of the user 2, so that the search space is reduced compared with Embodiment 1 and therefore it is possible to realize the recommendation in a shorter time.

Further, according to Modification 3, a comparison is made for the usage place and/or the specification, so that the accuracy of the recommendation of the recommendation unit 16 is improved compared with Embodiment 1.

### Embodiment 2.

In Embodiment 1, the recommendation apparatus 1 does not concern of whether or not the user has purchased a recommended device (that is, whether or not the user uses the recommended device). Therefore, when the recommendation apparatus 1 re-recommends the user to whom a recommendation has been made in the past, a situation may occur where the same device is re-recommended even if the user has purchased the recommended device at a time of a previous recommendation.

In Embodiment 2, when making recommendations to a specific user a plurality of times over a long period of time, the recommendation apparatus 1 makes a recommendation in consideration of details of a past recommendation. In order to make such a recommendation, the recommendation apparatus 1 according to the present embodiment performs a differential determination, with using a purchase history of the device and version information on a conceptual hierarchy.

In the present embodiment, differences from Embodiment 1 will be mainly described.

Incidentally, matters that are not described below are the same as those in Embodiment 1.

### *** Description of Configuration ***

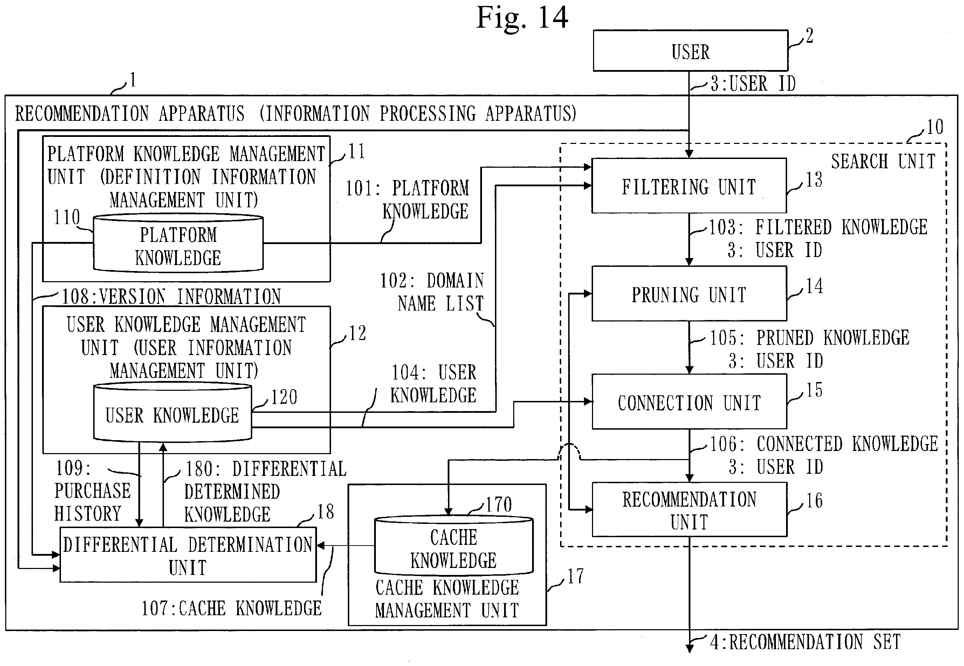

A configuration of the recommendation apparatus 1 according to Embodiment 2 will be described with reference to Fig. 14.

Compared with Fig. 1, a cache knowledge management unit 17 and a differential determination unit 18 are added in Fig. 14.

The cache knowledge management unit 17 holds the connected knowledge 106 and the user ID 3 for a certain period of time, as cache knowledge 170.

The differential determination unit 18 compares a version of the platform knowledge 110 with a version of the connected knowledge 106 of the cache knowledge 170. Further, the differential determination unit 18 compares a solution and a device included in the connected knowledge 106 of the cache knowledge 170, with a solution and a device indicated in a purchase history 109. As described below, the purchase history 109 indicates the device purchased by the user 2 (that is, the device used by the user 2) and the solution provided by the device.

Further, in the present embodiment, the user knowledge management unit 12 updates the user knowledge 120. More specifically, when it has been found by a determination of the differential determination unit 18, that a device (hereinafter referred to as a presented device) presented to the user 2 by the recommendation unit 16 has been purchased by the user 2 (that is, the presented device has been used by the user 2), the user knowledge management unit 12 adds the presented device to the user knowledge 120, as a new user device. Further, the user knowledge management unit 12 adds to the user knowledge 120, a solution provided by the presented device, as a new user device solution. Furthermore, the user knowledge management unit 12 adds to the user knowledge 120, an abstract concept that associates the new user device with the new user device solution, as a new abstract concept.

### *** Description of Operation ***

Operation of the recommendation apparatus 1 according to the present embodiment will be described.

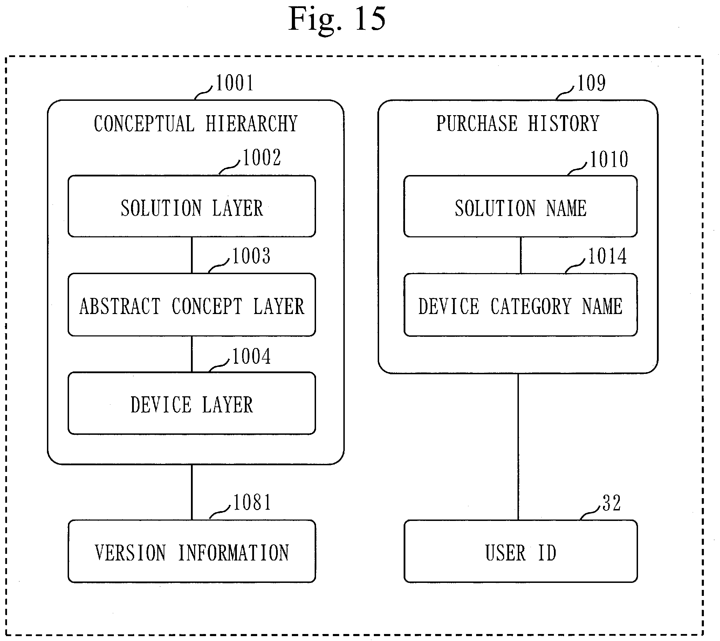

In the present embodiment, as illustrated in Fig. 15, the conceptual hierarchy 1001 is tied to version information 1081. The version information 1081 is information indicating a version of the conceptual hierarchy 1001.

The version information 1081 is also tied to the connected knowledge 106. Specifically, the version information 1081 is tied to the platform knowledge 101 acquired by the filtering unit 13. Then, the version information 1081 is inherited by the filtered knowledge 103 output by the filtering unit 13 and is tied to each of the conceptual hierarchy 1001. In the filtered knowledge 103 corresponding to the platform knowledge 101 in Fig. 5, the version information 1081 is tied to each of the conceptual hierarchy 1001a and the conceptual hierarchy 1001b. Similarly, the version information 1081 is also inherited by the pruned knowledge 105 output by the pruning unit 14 and is tied to each of the conceptual hierarchy 1001. In addition, the version information 1081 is also inherited by the connected knowledge 106 output by the connection unit 15 and is tied to each of the conceptual hierarchy 1001.

On the other hand, in the user knowledge 120, the purchase history 109 is tied to a user ID 32. The purchase history 109 indicates the device category name 1014 purchased by the user and the solution name 1010 realized by the purchased device category name 1014. The purchase history 109 stores the device category name 1014 purchased by the user and the solution name 1010 realized by the purchased device category name 1014, including a past purchase history. The purchase history 109 is, for example, a list that indicates the device category name 1014, the solution name 1010, a purchase date and time, and the like.

For example, the purchase history 109 may be updated by the user himself/herself or may be updated by a system of an online shopping site or a system of a retail store of home appliances.

The cache knowledge management unit 17 acquires from the connection unit 15, the connected knowledge 106 and the user ID 3. Then, the cache knowledge management unit 17 ties the connected knowledge 106 to the user ID 3 and holds them for a certain period of time, as the cache knowledge 170. The connected knowledge 106 held by the cache knowledge management unit 17 is also tied to the version information 1081.

The differential determination unit 18 compares the version information 1081 tied to the platform knowledge 110 with the version information 1081 tied to the connected knowledge 106 of the cache knowledge 170. Further, the differential determination unit 18 compares a solution and a device included in the connected knowledge 106 of the cache knowledge 170 with a solution and a device included in the purchase history 109.

Specifically, first, the differential determination unit 18 acquires the user ID 3 from the user 2. Further, the differential determination unit 18 acquires from the cache knowledge 170, cache knowledge 107 corresponding to the user ID 3. Furthermore, the differential determination unit 18 acquires from the user knowledge 120, the purchase history 109 corresponding to the user ID 3.

Next, the differential determination unit 18 acquires from the platform knowledge 110, version information 108 tied to the platform knowledge 101. Here, the differential determination unit 18 acquires only the version information 108 on the conceptual hierarchy 1001 included in the connected knowledge 106 of the cache knowledge 170.

Then, the differential determination unit 18 compares the version information 1081 tied to the platform knowledge 110 with the version information 1081 tied to the connected knowledge 106 of the cache knowledge 170.

In addition, the differential determination unit 18 compares a solution and a device included in the connected knowledge 106 of the cache knowledge 170 with a solution and a device indicated in the purchase history 109.

When the version information 1081 is consistent with each other and all of solutions and devices included in the connected knowledge 106 are included in the purchase history 109, the differential determination unit 18 determines that there is no difference. When all of solutions and devices included in the connected knowledge 106 are included in the purchase history 109, it means that the user 2 has purchased a device (the presented device) presented to the user 2 by the recommendation unit 16 (the user 2 has used a presented device).

When the differential determination unit 18 determines that there is no difference, the differential determination unit 18 outputs the cache knowledge 107 to the user knowledge management unit 12, as differential determined knowledge 180.

The user knowledge management unit 12 updates among the user knowledge 120, the user knowledge 104 corresponding to the user ID 3 included in the cache knowledge 107, with the connected knowledge 106 included in the differential determined knowledge 180. That is, the user knowledge management unit 12 adds to the user knowledge 104, a solution and a device newly added to the purchase history 109 and an abstract concept that associates the newly added solution with the newly added device, as a new user device solution, a new user device, and a new abstract concept. Therefore, when making a re-recommendation to the same user, the pruning unit 14 is able to delete from the filtered knowledge 103, a solution, a device, or the like that has been already recommended to the user.

### *** Description of Effect of This Embodiment ***

The recommendation apparatus 1 according to Embodiment 2 updates the user knowledge 120 by comparing details of a past recommendation with latest information (the version information 1081 and the purchase history 109). Therefore, when making recommendations to a specific user a plurality of times over a long period of time, it is possible to improve the accuracy of a recommendation by making the recommendation that conforms to reality and reflects the details of the past recommendation. That is, the recommendation apparatus 1 according to the present embodiment, stores details of a recommendation to the user in cache knowledge and determines whether or not user knowledge needs to be updated, with using a purchase history, when it is required to update the user knowledge. Further, when a timing of the recommendation and a timing of updating the user knowledge are different, the recommendation apparatus 1 reduces difference between tying in the platform knowledge and tying in the user knowledge, with using version information. For example, as illustrated in Fig. 6 or the like, "set A" which is an interpretation set and the domain name "vital activity" are tied in the platform knowledge 110 and the user knowledge 120. However, for example, when the tie between "set A" and vital activity disappears in the platform knowledge 110 due to circumstances of a manufacturer of the device, there is a difference between tying in the platform knowledge 110 and tying in the user knowledge 120. By comparing the version information 1081, it is possible to extract such a difference in tying and also it is possible to solve such a difference.

Further, the pruning unit 14 is able to delete from the filtered knowledge 103, the solution, the device, or the like that has been already recommended to the user. Therefore, the search space is reduced and therefore it is possible to reduce a recommendation time.

### <Modification 4>

When determining in the differential determination indicated in Embodiment 2 that there is a difference, the differential determination unit 18 may output the differential determined knowledge 180 to the recommendation unit 16. For example, when the version information 1081 tied to the cache knowledge 107 and the version information 108 acquired from the platform knowledge 110 are consistent, but the solution name 1010 and the device category name 1014 included in the cache knowledge 107 are not included in the purchase history 109 (that is, when the device (the presented device) presented by the recommendation unit 16 has not been used by the user 2), the differential determination unit 18 outputs the cache knowledge 107 to the recommendation unit 16, as the differential determined knowledge 180. Accordingly, for example, when re-recommending the solution name 1010 and the device category name 1014 for which a recommendation was unnecessary at some point, the recommendation unit 16 is able to recommend the solution name 1010 and the device category name 1014 by using the differential determined knowledge 180 without processes of the filtering unit 13, the pruning unit 14, and the connection unit 15 being carried out. That is, the recommendation unit 16 is able to present to the user 2 again, the device (the presented device) and its solution presented to the user 2 in the past. As a result, it is possible to reduce a recommendation time.

### Embodiment 3.

In the present embodiment, it is assumed that an unspecified number of users updates the platform knowledge 110. Then, in the present embodiment, in order to express generality and/or usefulness of a relation between nodes in the platform knowledge 101, a score is assigned to each of the link 2001 and the link 2003.

In the present embodiment, differences from Embodiment 1 will be mainly described.

Incidentally, matters that are not described below are the same as those in Embodiment 1.

### *** Description of Configuration ***

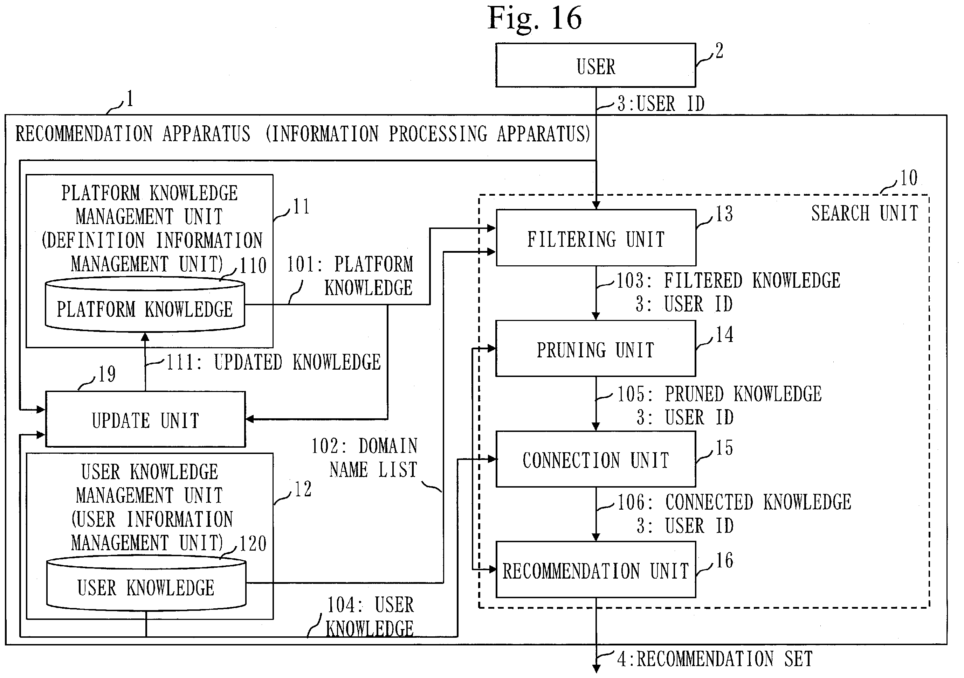

Fig. 16 illustrates a functional configuration example of the recommendation apparatus 1 according to the present embodiment.

Compared with Fig. 1, an update unit 19 is added in Fig. 16.

The update unit 19 updates a generality score indicating generality of the link 2001 indicating a correlation between a solution and an abstract concept. Further, the update unit 19 updates a usefulness score indicating usefulness of the link 2001.

Further, the update unit 19 updates a generality score indicating generality of the link 2003 indicating a correlation between an abstract concept and a device. Further, the update unit 19 updates a usefulness score indicating usefulness of the link 2003.

Furthermore, when the platform knowledge 110 does not indicate a correlation between the user device, the user device abstract concept, and the user device solution indicated in the user knowledge 104, the update unit 19 adds to the platform knowledge 110, the correlation between the user device, the user device abstract concept, and the user device solution indicated in the user knowledge 104.

Further, in the present embodiment, the pruning unit 14 uses the generality score and the usefulness score for the pruning process.

Further, the recommendation unit 16 also uses the generality score and the usefulness score for the recommendation process.

Next, the generality score and the usefulness score will be described.

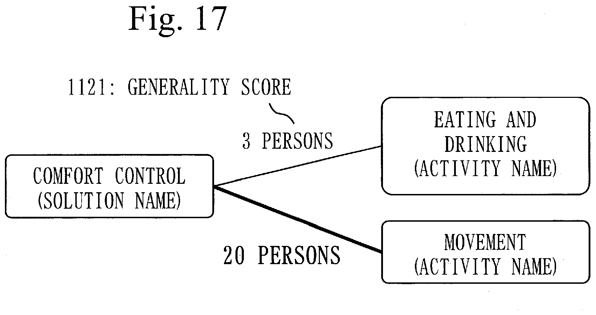

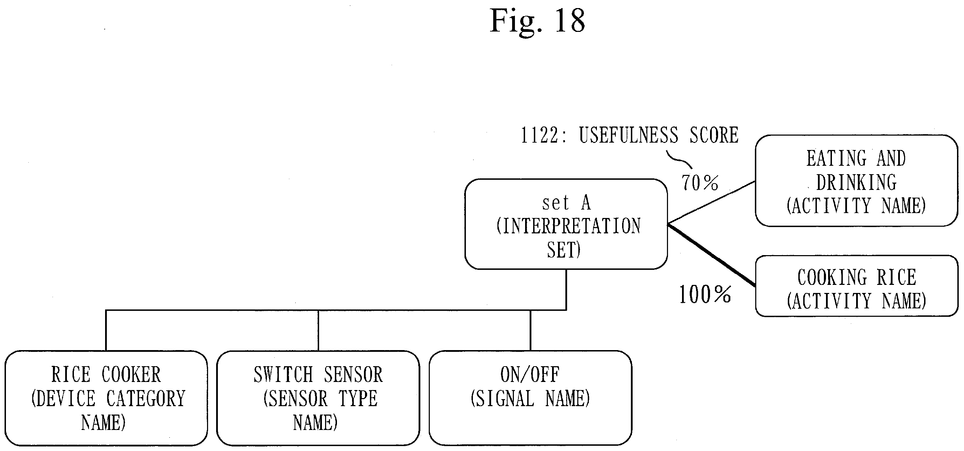

In the platform knowledge 110 according to the present embodiment, a generality score 1121 exemplified in Fig. 17 and a usefulness score 1122 exemplified in Fig. 18 are set at the link 2001 and the link 2003. The generality score 1121 expresses the generality of a relation represented by the link 2001 or the link 2003. The usefulness score 1122 expresses the usefulness of the relation represented by the link 2001 or the link 2003.

The generality score 1121 is, for example, calculated based on the number of users who have adopted the subjected relation (a relation between the solution and the abstract concept or a relation between the abstract concept and the device). Further, the generality score 1121 may be calculated based on a binary flag indicating presence or absence of a recommendation by a platform administrator.

Further, the usefulness score 1122 is, for example, calculated based on accuracy obtained from a learning model or the like corresponding to the link 2003. Further, the usefulness score 1122 may be calculated based on a binary flag indicating presence or absence of a recommendation by a platform administrator.

The generality score 1121 and the usefulness score 1122 are also set at the link 2001 and the link 2003 of the platform knowledge 101 acquired by the filtering unit 13 from the platform knowledge management unit 11. Therefore, the generality score 1121 and the usefulness score 1122 at the link 2001 and the link 2003 are also inherited by the filtered knowledge 103, the pruned knowledge 105, and the connected knowledge 106.

Consequently, the pruning unit 14 is able to use the generality score 1121 and the usefulness score 1122 in the filtered knowledge 103 for the pruning process. Further, the recommendation unit 16 is able to use the generality score 1121 and the usefulness score 1122 in the connected knowledge 106 for the recommendation process.

### *** Description of Operation ***

Next, an operation example of the recommendation apparatus 1 according to the present embodiment will be described.

In the following, operation of the update unit 19, the pruning unit 14, and the recommendation unit 16 will be mainly described.

The update unit 19 updates the platform knowledge 110 based on the user knowledge 120.

Firstly, the update unit 19 acquires the user ID 3 from the user 2. Then, the update unit 19 acquires from the user knowledge 120, the user knowledge 104 corresponding to the user ID 3.

In addition, the update unit 19 acquires the platform knowledge 101 from the platform knowledge management unit 11.

Then, the update unit 19 updates the generality score 1121 and/or the usefulness score 1122 in the platform knowledge 101, with using the user knowledge 104.

Further, when the relation between the user device solution and the user device abstract concept and/or the relation between the user device abstract concept and the user device included in the user knowledge 104 is not included in the platform knowledge 101, the update unit 19 adds to the platform knowledge 101, a relation that is not included.

Finally, the update unit 19 outputs to the platform knowledge management unit 11, the platform knowledge 101 after the above processes have been applied, as updated knowledge 111. The platform knowledge management unit 11 manages the updated knowledge 111, as new platform knowledge 110.

For example, when the generality score 1121 is calculated based on the number of users who have adopted the relation, in a case where there is the same relation in the user knowledge 104, the update unit 19 adds 1 to the generality score 1121 of a link of the same relation in the platform knowledge 101.

Further, when the usefulness score 1122 is calculated based on the accuracy acquired from the learning model or the like, the update unit 19 calculates a mean value of the usefulness scores 1122 between relations which commonly exist in the platform knowledge 101 and the user knowledge 104, and updates the usefulness score 1122 with the mean value. For example, it is assumed that the usefulness score for "set A" and "eating and drinking" in the user knowledge 104 is 70% and the usefulness score for the same set in the platform knowledge 101 is 60%. In this case, the update unit 19 updates the usefulness score for "set A" and "eating and drinking" in the platform knowledge 101 with the mean value of 65%. When there is the usefulness score for "set A" and "eating and drinking" in a plurality of pieces of user knowledge 104, the update unit 19 calculates the mean value with using the usefulness score in the plurality of pieces of user knowledge 104.

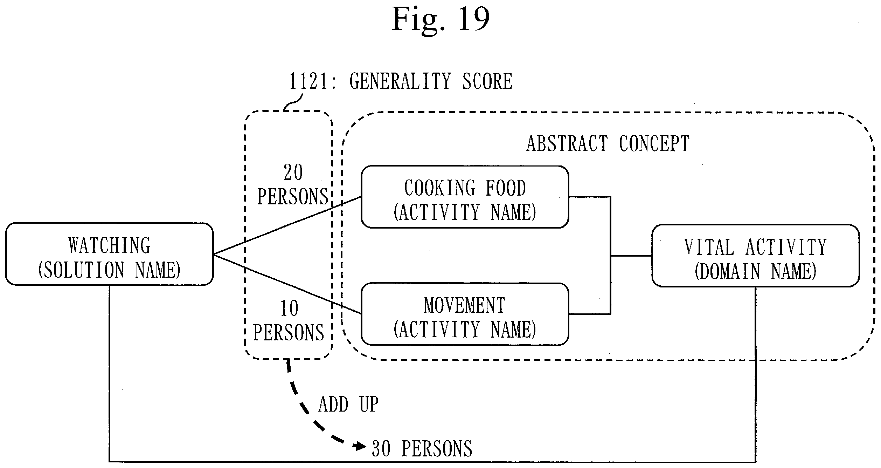

The update unit 19 updates another generality score 1121 and another usefulness score 1122 in the platform knowledge 101 that have not been updated in the above processes, with using a hierarchical structure of an abstract concept that is tied to the updated generality score 1121 and the updated usefulness score 1122. For example, as illustrated in Fig. 19, the update unit 19 updates the generality score 1121 and the usefulness score 1122 by inheriting, adding, averaging, or the like the updated generality score 1121 and the updated usefulness score 1122. In the example of Fig. 19, "20 persons" is obtained as the generality score 1121 for "watching" and "cooking food". Further, "10 persons" is obtained as the generality score 1121 for "watching" and "movement". On the other hand, in the example of Fig. 19, a generality score for "watching" and "vital activity" is not obtained. "vital activity" is a superordinate concept of "cooking food" and "movement". In this case, by adding "20 persons" which is the generality score 1121 for "watching" and "cooking food" and "10 persons" which is the generality score 1121 for "watching" and "movement", the update unit 19 is able to set "30 persons", as the generality score 1121 for "watching" and "vital activity".

Further, in the present embodiment, the pruning unit 14 performs the pruning process of step S40 in Fig. 8 with using the generality score 1121 and the usefulness score 1122.

For example, the pruning unit 14 ranks a pair of a solution name and a device category name with using the generality score 1121 and the usefulness score 1122. Then, the pruning unit 14 deletes from the filtered knowledge 103, the pair of the solution name and the device category name that is at a low rank.

Further, in the present embodiment, the recommendation unit 16 performs the recommendation process of step S60 in Fig. 8 with using the generality score 1121 and the usefulness score 1122.

For example, the recommendation unit 16 ranks the pair of the solution name and the device category name with using the generality score 1121 and the usefulness score 1122. Then, the recommendation unit 16 specifies the pair of the solution name and the device category name which is at a high rank, as the recommendation set 4.

### *** Description of Effect of This Embodiment ***

In the present embodiment, the recommendation apparatus 1 assigns the generality score and the usefulness score to the link 2001 and/or the link 2003.

Therefore, according to the present embodiment, in a situation where an unspecified number of users updates the platform knowledge 110, a solution and a device with a low generality score or a low usefulness score can be removed from the recommendation set.

Further, according to the present embodiment, the accuracy of a recommendation is improved.

Further, the pruning unit 14 refers to the generality score or the usefulness score, so that it is possible to reduce the search space and a time required for a recommendation is shortened.

### Embodiment 4.

In the present embodiment, it is assumed that each user directly updates own user knowledge 104 in the user knowledge 120. Then, in the present embodiment, in order to prevent an inconsistency in notations between the platform knowledge 110 and the user knowledge 104, the notations are normalized with using vocabulary knowledge.

In the present embodiment, differences from Embodiment 1 will be mainly described.

Incidentally, matters that are not described below are the same as those in Embodiment 1.

### *** Description of Configuration ***

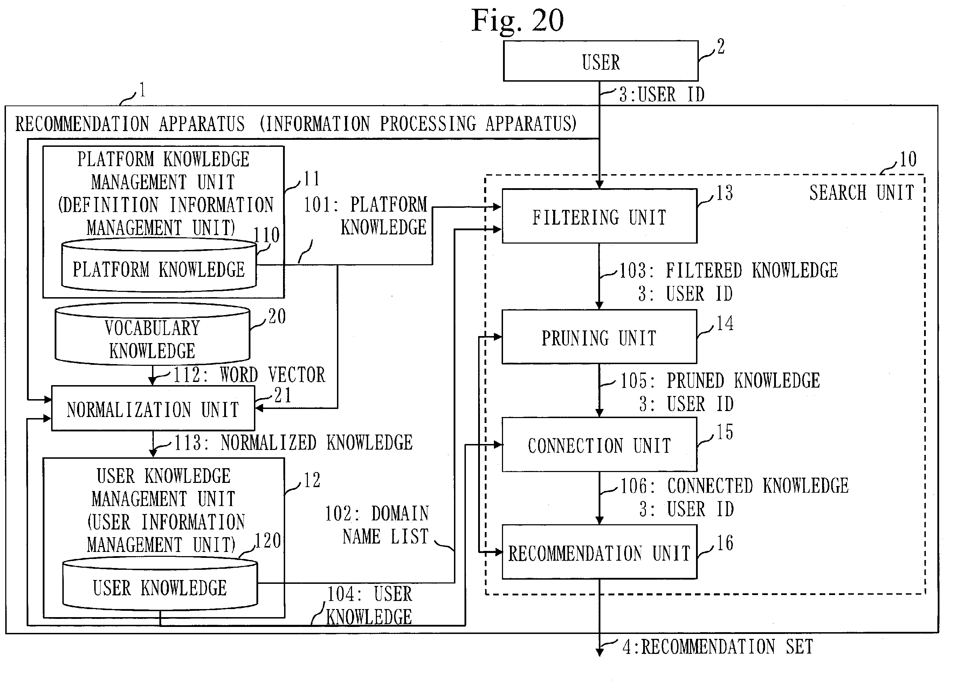

Fig. 20 illustrates a functional configuration example of the recommendation apparatus 1 according to the present embodiment.

Compared with Fig. 1, vocabulary knowledge 20 and a normalization unit 21 are added in Fig. 20.

The vocabulary knowledge 20 holds one or more word vectors 112. The word vector 112 is, for example, a result obtained by performing a morphological analysis and by performing a word embedding process such as Word2Vec, to any text data. The vocabulary knowledge 20 outputs the word vector 112 to the normalization unit 21.

The normalization unit 21 extracts inconsistency in notations between the platform knowledge 110 and the user knowledge 120, and normalizes the notations with using the word vector 112.

That is, when a notation of at least one of the user device, the user device abstract concept, and the user device solution in the user knowledge 104, is similar to but is not consistent with a corresponding notation in the platform knowledge 110, the normalization unit 21 changes the notation in the user knowledge 104 to be consistent with the notation in the platform knowledge 110.

### *** Description of Operation ***

In the following, an operation example of the normalization unit 21 according to the present embodiment will be described.

Firstly, the normalization unit 21 acquires the user ID 3 from the user 2. Then, the normalization unit 21 acquires from the user knowledge management unit 12, the user knowledge 104 corresponding to the user ID 3.

In addition, the normalization unit 21 acquires the platform knowledge 101 from the platform knowledge 110 and acquires the word vector 112 from the vocabulary knowledge 20.

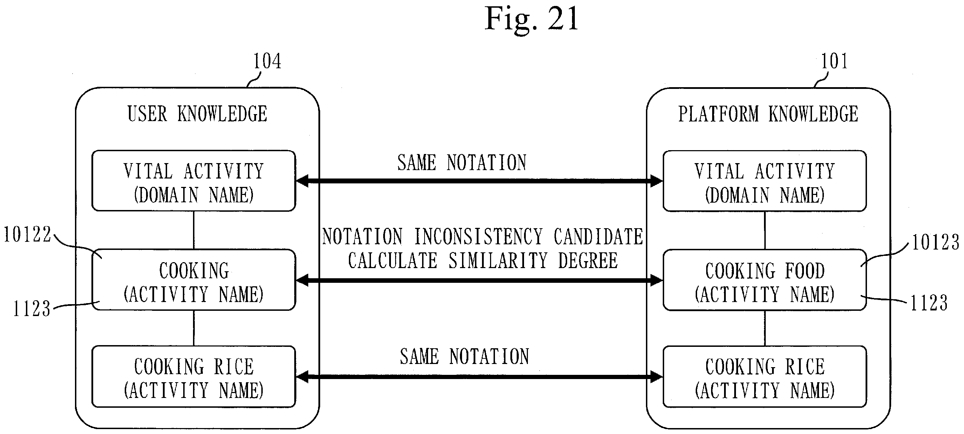

Next, as exemplified in Fig. 21, the normalization unit 21 extracts from the platform knowledge 101 and the user knowledge 104, an inconsistent notation as a notation inconsistency candidate 1123. For example, the normalization unit 21 compares the notation in the platform knowledge 101 with the notation in the user knowledge 104 in units of two or more nodes which are interconnected in the conceptual hierarchy 1001 and extracts the notation inconsistency candidate 1123. In the example of Fig. 21, the normalization unit 21 compares the notations of the domain name, the activity name, and the activity name in the platform knowledge 101 with the notations of the same in the user knowledge 104, where the domain name, the activity name, and the activity name are interconnected. Then, in the example of Fig. 21, at the domain names "vital activity" and the activity names "cooking rice", the notations are consistent. On the other hand, at an activity name "cooking" 10122 and an activity name "cooking food" 10123, the notations are not consistent. Therefore, the normalization unit 21 extracts the activity name "cooking" 10122 and the activity name "cooking food" 10123, as the notation inconsistency candidate 1123.

Then, the normalization unit 21 calculates a similarity degree between the notation inconsistency candidate 1123 in the platform knowledge 101 and the notation inconsistency candidate 1123 in the user knowledge 104, with using the word vector 112. The normalization unit 21 calculates the similarity degree with using a cosine similarity degree, or the like.

When the similarity degree exceeds a threshold value, the normalization unit 21 changes the notation of the notation inconsistency candidate 1123 in the user knowledge 104 to the notation of the notation inconsistency candidate 1123 in the platform knowledge 101.

The normalization unit 21 performs the above processes on all notations in the user knowledge 104 and outputs to the user knowledge management unit 12, the user knowledge 104 for which the above processes have been completed, as normalized knowledge 113.

The user knowledge management unit 12 manages the normalized knowledge 113 as new user knowledge 120.

### *** Description of Effect of This Embodiment ***

In the present embodiment, the recommendation apparatus 1 corrects notation inconsistency of a node in the user knowledge 104.

Therefore, according to the present embodiment, in a situation where each user directly updates own user knowledge 104 in the user knowledge 120, it is possible to reduce the notation inconsistency. As a result, according to the present embodiment, in a process of the pruning unit 14 or the recommendation unit 16, it is possible to prevent a situation where the same concepts are recognized as different concepts due to a difference in notations and a process intended by a user is not performed. Then, according to the present embodiment, the accuracy of a recommendation is improved.

Embodiments 1 to 4 and Modifications 1 to 4 have been described above and two or more of these embodiments and modifications may be implemented in connection.

Alternatively, one of these embodiments and modifications may be implemented partially.

Alternatively, two or more of these embodiments and modifications may be implemented partially in connection.

Further, the configurations and procedures described above in these embodiments and modifications may be modified as necessary.

### *** Supplementary Description of Hardware Configuration ***

Finally, a supplementary description of the hardware configuration of the recommendation apparatus 1 will be given.

The processor 901 illustrated in Fig. 2 is an Integrated Circuit (IC) that performs processing.

The processor 901 is a Central Processing Unit (CPU), a Digital Signal Processor (DSP), or the like.

The main storage device 902 illustrated in Fig. 2 is a Random Access Memory (RAM).

The auxiliary storage device 903 illustrated in Fig. 2 is a Read Only Memory (ROM), a flash memory, a Hard Disk Drive (HDD), or the like.

The input/output device 904 illustrated in Fig. 2 is, for example, a mouse, a keyboard, a display, or the like.

Further, the auxiliary storage device 903 also stores an Operating System (OS).

Then, at least a part of the OS is executed by the processor 901.

While executing at least the part of the OS, the processor 901 executes programs that implement functions of the platform knowledge management unit 11, the user knowledge management unit 12, the filtering unit 13, the pruning unit 14, the connection unit 15, the recommendation unit 16, the cache knowledge management unit 17, the differential determination unit 18, the update unit 19, and the normalization unit 21.

By the processor 901 executing the OS, task management, memory management, file management, communication control, and the like are performed.

Further, at least one of information, data, a signal value, and a variable value that indicate results of processes of the platform knowledge management unit 11, the user knowledge management unit 12, the filtering unit 13, the pruning unit 14, the connection unit 15, the recommendation unit 16, the cache knowledge management unit 17, the differential determination unit 18, the update unit 19, and the normalization unit 21 is stored in at least one of the main storage device 902, the auxiliary storage device 903, and a register and a cache memory in the processor 901.

Further, the programs that implement the functions of the platform knowledge management unit 11, the user knowledge management unit 12, the filtering unit 13, the pruning unit 14, the connection unit 15, the recommendation unit 16, the cache knowledge management unit 17, the differential determination unit 18, the update unit 19, and the normalization unit 21 may be stored in a portable recording medium such as a magnetic disk, a flexible disk, an optical disc, a compact disc, a Blu-ray (registered trademark) disc, or a DVD. Then, the portable recording medium storing the programs that implement the functions of the platform knowledge management unit 11, the user knowledge management unit 12, the filtering unit 13, the pruning unit 14, the connection unit 15, the recommendation unit 16, the cache knowledge management unit 17, the differential determination unit 18, the update unit 19, and the normalization unit 21 may be distributed.

Further, the "unit" of each of the platform knowledge management unit 11, the user knowledge management unit 12, the filtering unit 13, the pruning unit 14, the connection unit 15, the recommendation unit 16, the cache knowledge management unit 17, the differential determination unit 18, the update unit 19, and the normalization unit 21 may be read as a "circuit", "step", "procedure", "process", or "circuitry".

Further, the recommendation apparatus 1 may be implemented by a processing circuit. The processing circuit is, for example, a logic Integrated Circuit (IC), a Gate Array (GA), an Application Specific Integrated Circuit (ASIC), or a Field-Programmable Gate Array (FPGA).

In this case, each of the platform knowledge management unit 11, the user knowledge management unit 12, the filtering unit 13, the pruning unit 14, the connection unit 15, the recommendation unit 16, the cache knowledge management unit 17, the differential determination unit 18, the update unit 19, and the normalization unit 21 is implemented as a part of the processing circuit.

In the present description, a superordinate concept of the processor and the processing circuit is referred to as "processing circuitry".

That is, each of the processor and the processing circuit is a specific example of the "processing circuitry".

### Reference Signs List

1: recommendation apparatus; 2: user; 3: user ID; 4: recommendation set; 10: search unit; 11: platform knowledge management unit; 12: user knowledge management unit; 13: filtering unit; 14: pruning unit; 15: connection unit; 16: recommendation unit; 17: cache knowledge management unit; 18: differential determination unit; 19: update unit; 20: vocabulary knowledge; 21: normalization unit; 31: user ID; 32: user ID; 101: platform knowledge; 102: domain name list; 103: filtered knowledge; 104: user knowledge; 105: pruned knowledge; 106: connected knowledge; 107: cache knowledge; 108: version information; 109: purchase history; 110: platform knowledge; 111: updated knowledge; 112: word vector; 113: normalized knowledge; 120: user knowledge; 170: cache knowledge; 180: differential determined knowledge; 901: processor; 902: main storage device; 903: auxiliary storage device; 904: input/output device; 1001: conceptual hierarchy; 1002: solution layer; 1003: abstract concept layer; 1004: device layer; 1010: solution name; 1011: domain name; 1012: activity name; 1013: interpretation set; 1014: device category name; 1015: sensor (actuator) type name; 1016: signal (control) name; 1081: version information; 1121: generality score; 1122: usefulness score; 1123: notation inconsistency candidate; 2001: link; 2002: link; 2003: link; 2004: link

## Claims

1. An information processing apparatus comprising:
a definition information management unit to manage definition information indicating a plurality of devices, a plurality of solutions provided by the plurality of devices, and a plurality of association concepts which is a plurality of concepts that associates the plurality of devices with the plurality of solutions, and correlating each device to one or more association concepts and correlating each solution to one or more association concepts;
a user information management unit to manage user information indicating as a user device, a device which is one of devices indicated in the definition information and which is used by a user, indicating as a user device solution, a solution which is one of solutions indicated in the definition information and which is provided by the user device, and indicating as a user device association concept, an association concept which is one of association concepts indicated in the definition information and which associates the user device with the user device solution; and
a search unit to search for at least one of: a device other than the user device, which is correlated to the user device association concept in the definition information; and a solution other than the user device solution, which is correlated to the user device association concept in the definition information.

2. The information processing apparatus according to claim 1, wherein
the search unit presents to the user, at least one of the device and the solution obtained by a search.

3. The information processing apparatus according to claim 1, wherein
after excluding from a subject for a search, a device and a solution which are correlated to an association concept other than the user device association concept in the definition information and further excluding from the subject for the search, the user device solution which is correlated to the user device association concept in the definition information and a device which is correlated via the user device association concept to the user device solution in the definition information, the search unit searches for at least one of: the device other than the user device, which is correlated to the user device association concept in the definition information; and the solution other than the user device solution, which is correlated to the user device association concept in the definition information.

4. The information processing apparatus according to claim 1, wherein
the search unit searches for the solution other than the user device solution, which is correlated to the user device association concept in the definition information, and searches for a device other than the user device, which is correlated via the user device association concept to the solution obtained by the search in the definition information.

5. The information processing apparatus according to claim 1, further comprises
an acquisition unit to acquire as a user specified association concept, an association concept specified by the user, which is one of association concepts indicated in the definition information and which is other than the user device association concept, wherein
the search unit searches for at least one of: a device other than the user device, which is correlated to the user specified association concept in the definition information; and a solution other than the user device solution, which is correlated to the user specified association concept in the definition information.

6. The information processing apparatus according to claim 1, wherein
when two or more solutions are obtained as a result of searching the solution other than the user device solution, which is correlated to the user device association concept in the definition information, the search unit searches for a device which is correlated via the user device association concept to each of the two or more solutions, and when devices obtained by the search are the same devices, the search unit determines that the two or more solutions are in a conflicting relation.

7. The information processing apparatus according to claim 1, wherein
when two or more devices are obtained as a result of searching the device other than the user device, which is correlated to the user device association concept in the definition information and when the two or more devices are the same devices, the search unit determines that the two or more devices are in a conflicting relation.

8. The information processing apparatus according to claim 1, wherein
the definition information management unit manages the definition information indicating a usage place of each device,
the user information management unit manages the user information indicating a user device usage place which is one of usage places indicated in the definition information and which is a usage place of the user device, and
the search unit searches for the solution other than the user device solution, which is correlated to the user device association concept in the definition information, and searches for a device which is correlated via the user device association concept to the solution obtained by the search in the definition information, and whose usage place is consistent with the user device usage place.

9. The information processing apparatus according to claim 1, wherein
the definition information management unit manages the definition information indicating a specification of each device,
the user information management unit manages the user information indicating a user device specification which is one of specifications indicated in the definition information and which is a specification of the user device, and
the search unit searches for the solution other than the user device solution, which is correlated to the user device association concept in the definition information, and searches for a device which is correlated via the user device association concept to the solution obtained by the search in the definition information, and whose specification is consistent with the user device specification.

10. The information processing apparatus according to claim 1, wherein
the user information management unit manages the user information indicating a correlation between the user device, the user device association concept, and the user device solution, and
the information processing apparatus further comprises
an update unit to add to the definition information, the correlation between the user device, the user device association concept, and the user device solution indicated in the user information, when the definition information does not indicate the correlation between the user device, the user device association concept, and the user device solution indicated in the user information.

11. The information processing apparatus according to claim 10, wherein
the definition information management unit manages the definition information in which a score is set for each correlation between a device and an association concept and for each correlation between an association concept and a solution, the score expressing at least one of generality and usefulness of the correlation and
the update unit updates the score.

12. The information processing apparatus according to claim 11, wherein the search unit uses the score for a search.

13. The information processing apparatus according to claim 1, further comprises
a normalization unit to change a notation in the user information, which is similar to but is not consistent with a corresponding notation in the definition information, to be consistent with the corresponding notation in the definition information, when at least one of notations of the user device, the user device association concept, and the user device solution in the user information, is similar to but is not consistent with the corresponding notation in the definition information.

14. The information processing apparatus according to claim 2, wherein
the search unit presents to the user, at least a device obtained by a search and
when the user uses a presented device which is the device presented to the user by the search unit, the user information management unit adds the presented device to the user information, as a new user device, adds to the user information, a solution provided by the presented device, as a new user device solution, and adds to the user information, an association concept that associates the new user device with the new user device solution, as a new user device association concept.

15. The information processing apparatus according to claim 2, wherein
the search unit presents to the user, at least a device obtained by a search and when the user does not use a presented device which is the device presented to the user, presents the presented device again to the user.

16. An information processing method comprising:
managing definition information indicating a plurality of devices, a plurality of solutions provided by the plurality of devices, and a plurality of association concepts which is a plurality of concepts that associates the plurality of devices with the plurality of solutions, and correlating each device to one or more association concepts and correlating each solution to one or more association concepts, by a computer;
managing user information indicating as a user device, a device which is one of devices indicated in the definition information and which is used by a user, indicating as a user device solution, a solution which is one of solutions indicated in the definition information and which is provided by the user device, and indicating as a user device association concept, an association concept which is one of association concepts indicated in the definition information and which associates the user device with the user device solution, by the computer; and
searching for at least one of: a device other than the user device, which is correlated to the user device association concept in the definition information; and a solution other than the user device solution, which is correlated to the user device association concept in the definition information, by the computer.

17. An information processing program for causing a computer to execute:
a definition information management process to manage definition information indicating a plurality of devices, a plurality of solutions provided by the plurality of devices, and a plurality of association concepts which is a plurality of concepts that associates the plurality of devices with the plurality of solutions, and correlating each device to one or more association concepts and correlating each solution to one or more association concepts;
a user information management process to manage user information indicating as a user device, a device which is one of devices indicated in the definition information and which is used by a user, indicating as a user device solution, a solution which is one of solutions indicated in the definition information and which is provided by the user device, and indicating as a user device association concept, an association concept which is one of association concepts indicated in the definition information and which associates the user device with the user device solution; and
a search process to search for at least one of: a device other than the user device, which is correlated to the user device association concept in the definition information; and a solution other than the user device solution, which is correlated to the user device association concept in the definition information.
